(19) Europäisches Patentamt
European Patent Office
Office européen des brevets

(11) EP 3 584 341 A1

(12) **EUROPEAN PATENT APPLICATION**
published in accordance with Art. 153(4) EPC

(43) Date of publication:
25.12.2019 Bulletin 2019/52

(51) Int Cl.:
*C22C 38/00* (2006.01)    *C21D 1/18* (2006.01)
*C21D 9/00* (2006.01)    *C22C 38/60* (2006.01)

(21) Application number: 18754038.0

(22) Date of filing: 20.02.2018

(86) International application number:
PCT/JP2018/006057

(87) International publication number:
WO 2018/151325 (23.08.2018 Gazette 2018/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 20.02.2017 JP 2017029311

(71) Applicant: Nippon Steel Corporation
Tokyo 100-8071 (JP)

(72) Inventors:
• TODA, Yuri
Tokyo 100-8071 (JP)
• ABUKAWA, Genki
Tokyo 100-8071 (JP)
• MAEDA, Daisuke
Tokyo 100-8071 (JP)
• HIKIDA, Kazuo
Tokyo 100-8071 (JP)

(74) Representative: Vossius & Partner
Patentanwälte Rechtsanwälte mbB
Siebertstrasse 3
81675 München (DE)

(54) **HOT STAMP MOULDED BODY**

(57) There is provided a hot stamped body including a middle part in sheet thickness and a surface layer arranged at both sides or one side of the middle part in sheet thickness, further including an intermediate layer formed between the middle part in sheet thickness and each surface layer so as to adjoin them, wherein the middle part in sheet thickness has a predetermined composition, the middle part in sheet thickness has a hardness of 500Hv or more and 800Hv or less, the surface layer has a hardness change $\Delta H_1$ in the sheet thickness direction of 100Hv or more and less than 200Hv, and the intermediate layer has a hardness change $\Delta H_2$ in the sheet thickness direction of 10Hv or more and less than 50Hv.

FIG. 1

(ii)

Surface Layer    (i)

Middle Part in Sheet Thickness

(i)

EP 3 584 341 A1

**Description**

FIELD

The present invention relates to high strength steel sheet used for structural members or reinforcing members of automobiles or structures where strength is required, in particular a hot stamped body excellent in impact resistance and hydrogen embrittlement resistance.

BACKGROUND

In recent years, from the viewpoints of environmental protection and resource saving, lighter weight of automobile bodies is being sought. For this reason, application of high strength steel sheet to automobile members has been accelerating. However, along with the increase in strength of steel sheets, the formability deteriorates, and therefore in high strength steel sheets, formability into members with complicated shapes is a problem.

To solve this problem, hot stamping, where the steel sheet is heated to a high temperature of the austenite region, then press formed, is increasingly being applied. Since hot stamping performs press forming and simultaneously quenching in the die, it is possible to obtain a strength corresponding to the C amount of the steel sheet. This is being taken note of as a technique achieving both formation of a material into an automobile member and securing strength.

However, since in conventional hot pressed parts which were produced by press quenching, the entire sheet thickness is formed by hard structures (mainly martensite), if bending deformation occurs at the time of collision of the automobile, the largest strain will be applied to the bent portion of the part, cracks will advance starting from the vicinity of the surface layer of the steel sheet, and finally fracture will easily be caused. Further, since the density of lattice defects at the surface layer of the steel sheet is high, there is the problem that penetration by hydrogen is promoted and the member becomes poor in hydrogen embrittlement resistance. Due to this reason, hot pressed parts produced by press quenching have been limited in locations of auto parts applied to.

To deal with this problem, art has been proposed for raising the deformability of hot pressed parts to suppress cracking. PTL 1 discloses making the hardness of the middle in sheet thickness of a hot pressed part 400Hv or more and forming a soft layer with a thickness of 20 $\mu$m to 200 $\mu$m and a hardness of 300Hv or less on a surface layer so as to secure a strength of a tensile strength of 1300 MPa or more while suppressing cracking at the time of automobile collision. Furthermore, PTL 1 discloses that the above soft layer has a tempered structure.

PTL 2 discloses controlling the concentration of carbon at a surface layer of a high strength automobile member to 1/5 or less of the concentration of carbon of the inner layer steel so as to reduce the density of lattice defects of the surface layer and improve the hydrogen embrittlement resistance.

PTL 3 discloses to make the steel structure a dual phase structure of ferrite and martensite and raise the area rate of ferrite of a surface layer portion compared with an inner layer portion so as to obtain a hot pressed steel sheet member having high tensile strength and excellent ductility and bendability.

However, in the members described in PTLs 1 and 2, by making a surface layer portion in sheet thickness by soft structures and making a middle part in sheet thickness by hard structures, a sharp gradient in hardness ends up being formed in the sheet thickness direction. For this reason, when subjected to bending deformation, there is the issue that cracking easily occurs near the boundary between the soft structures and hard structures where this sharp gradient of hardness occurs. Further, in the member described in PTL 3, a surface layer portion in sheet thickness is made by soft structures and the middle part in sheet thickness is made a dual phase structure of hard structures and soft structures so as to reduce the sharp gradient in hardness in the sheet thickness direction. However, since making the middle part in sheet thickness a dual phase structure, the upper limit of tensile strength ends up becoming 1300 MPa or so. It is difficult to secure the tensile strength of 1500 MPa or more sought for hot pressed parts.

[CITATION LIST]

[PATENT LITERATURE]

[PTL 1] Japanese Unexamined Patent Publication No. 2015-30890
[PTL 2] Japanese Unexamined Patent Publication No. 2006-104546
[PTL 3] WO 2015/097882

SUMMARY

[TECHNICAL PROBLEM]

In consideration of the technical issues in the prior art, an object of the present invention is to provide a hot stamped body excellent in impact resistance and hydrogen embrittlement resistance.

[SOLUTION TO PROBLEM]

The inventors engaged in an in-depth study of a method for solving the above technical issues. First, to improve the hydrogen embrittlement resistance, it is effective to reduce the density of lattice defects at the surface layer of sheet thickness. For this reason, it is necessary to form soft structures at the surface layer. On the other hand, to secure a 1500 MPa or more tensile strength, it is necessary to form the middle part in sheet thickness by only hard structures. Therefore, the inventors thought that if forming the surface layer of sheet thickness by soft structures and forming the middle part in sheet thickness by hard structures, if it were possible to reduce the rapid gradient of hardness in the sheet thickness direction occurring near the boundary of the hard structures and soft structures, a 1500 MPa or more tensile strength and excellent hydrogen embrittlement resistance could be ensured while excellent bendability could be obtained. Specifically, they caused the formation of structures (intermediate layer) having hardnesses between the hard structures and soft structures at the boundary of the same so as to ease the concentration of stress at the time of bending deformation and suppress the occurrence of cracking. Furthermore, they discovered that by controlling the gradient of hardness inside the intermediate layer, even if cracks occur, the effect of suppressing their progression can be obtained. As a result, they succeeded in securing a 1500 MPa or more tensile strength and excellent hydrogen embrittlement resistance while realizing excellent bendability and thereby were able to obtain hot stamped bodies excellent in impact resistance and hydrogen embrittlement resistance.

Further, the inventors discovered that by controlling the addition amount of Mn at the middle part in sheet thickness to a relatively high value, more specifically to 1.50% to less than 3.00%, it is possible to raise the hardenability and reduce the variation in hardness at the stamped body, i.e., to stably secure a high strength. As a result, it was possible to secure a 1500 MPa or more tensile strength and excellent hydrogen embrittlement resistance while obtaining a hot stamped body excellent in impact resistance from the viewpoint of not only bendability, but also strength stability (variation in hardness).

Furthermore, the inventors discovered that by controlling the addition amount of Si at the middle part in sheet thickness to a relatively high value, more specifically to more than 0.50% and less than 3.00% to secure structures contributing to improvement of deformability, it is possible to raise the ductility. As a result, they were able to secure a 1500 MPa or more tensile strength and excellent hydrogen embrittlement resistance while obtaining a hot stamped body excellent in impact resistance from the viewpoint of not only bendability, but also ductility.

In addition, the inventors discovered that by controlling the addition amounts of Mn and Si in the middle part in sheet thickness to relatively high values, more specifically respectively to 1.50% or more and less than 3.00% and to more than 0.50% and less than 3.00%, it is possible to raise the hardenability to reduce the variation in hardness at the stamped body, i.e., to stably secure a high strength and, furthermore, it is possible to secure structures contributing to improvement of deformability and thereby raise the ductility. As a result, they were able to secure a 1500 MPa or more tensile strength and excellent hydrogen embrittlement resistance while obtaining a hot stamped body excellent in impact resistance from the viewpoint of not only bendability, but also of strength stability (variation of hardness) and ductility.

The present invention was completed based on the above discovery and has as its gist the following:

(1) A hot stamped body comprising a middle part in sheet thickness and a surface layer arranged at both sides or one side of the middle part in sheet thickness, wherein

the hot stamped body further comprises an intermediate layer formed between the middle part in sheet thickness and each surface layer so as to adjoin them,

the middle part in sheet thickness comprises, by mass%,

C: 0.20% or more and less than 0.70%

Si: less than 3.00%,

Mn: 0.20% or more and less than 3.00%,

P: 0.10% or less,

S: 0.10% or less,

sol. Al: 0.0002% or more and 3.0000% or less,

N: 0.01% or less, and

a balance of Fe and unavoidable impurities,

the middle part in sheet thickness has a hardness of 500Hv or more and 800Hv or less,

the surface layer has a hardness change $\Delta H_1$ in the sheet thickness direction of 100Hv or more and less than 200Hv, and

the intermediate layer has a hardness change $\Delta H_2$ in the sheet thickness direction of 10Hv or more and less than 50Hv.

(2) The hot stamped body according to the above (1), wherein the Si content of the middle part in sheet thickness is 0.50% or less and the Mn content of the middle part in sheet thickness is 0.20% or more and less than 1.50%.

(3) The hot stamped body according to the above (1), wherein the Si content of the middle part in sheet thickness is 0.50% or less and the Mn content of the middle part in sheet thickness is 1.50% or more and less than 3.00%.

(4) The hot stamped body according to the above (1), wherein the Si content of the middle part in sheet thickness is more than 0.50% and less than 3.00%, the Mn content of the middle part in sheet thickness is 0.20% or more and less than 1.50%, and the middle part in sheet thickness comprises, by area percent, 1.0% or more and less than 5.0% of residual austenite.

(5) The hot stamped body according to the above (1), wherein the Si content of the middle part in sheet thickness is more than 0.50% and less than 3.00%, the Mn content of the middle part in sheet thickness is 1.50% or more and less than 3.00%, and the middle part in sheet thickness comprises, by area percent, 1.0% or more and less than 5.0% of residual austenite.

(6) The hot stamped body according to any one of the above (1) to (5), wherein the middle part in sheet thickness further comprises, by mass%, Ni: 0.01% or more and 3.00% or less.

(7) The hot stamped body according to any one of the above (1) to (6), wherein the middle part in sheet thickness further comprises, by mass%, one or more of Nb: 0.010% or more and 0.150% or less, Ti: 0.010% or more and 0.150% or less, Mo: 0.005% or more and 1.000% or less, and B: 0.0005% or more and 0.0100% or less.

(8) The hot stamped body according to any one of the above (1) to (7), further comprising a plated layer at the surface of the each surface layer.

[ADVANTAGEOUS EFFECTS OF INVENTION]

According to the present invention, it is possible to realize excellent bendability and possible to provide a hot stamped body excellent in impact resistance and hydrogen embrittlement resistance. Further, according to the present invention, by controlling the addition amount of Mn at the middle part in sheet thickness to a relatively high value, it is possible to further improve the impact resistance from the viewpoint of not only bendability, but also strength stability (variation of hardness). Furthermore, according to the present invention, by controlling the addition amount of Si at the middle part in sheet thickness to a relatively high value, it is possible to further improve the impact resistance from the viewpoint of not only bendability, but also ductility. In addition, according to the present invention, by controlling the addition amounts of Mn and Si at the middle part in sheet thickness to relatively high values, it is possible to further improve the impact resistance from the viewpoints of not only bendability, but also of strength stability (variation of hardness) and ductility.

BRIEF DESCRIPTION OF DRAWINGS

FIG. 1 is a schematic view for explaining the diffusion of C atoms when producing the high strength steel sheet of the present invention.
FIG. 2 is a graph showing the change in dislocation density after a rolling pass relating to rough rolling used in the method for producing the high strength steel sheet of the present invention.

DESCRIPTION OF EMBODIMENTS

Below, a hot stamped body of the present invention and a method for producing the same will be explained.
First, the reasons for limitation of the chemical constituents of the middle part in sheet thickness forming the hot stamped body of the present invention will be explained. Below, the % relating to the chemical constituents means mass%.

"C: 0.20% to less than 0.70%"

C is an important element for obtaining a 500Hv to 800Hv hardness at the middle part in sheet thickness. With less than 0.20%, it is difficult to secure 500Hv or more at the middle part in sheet thickness, so C is 0.20% or more. Preferably it is 0.30% or more. On the other hand, with 0.70% or more, the hardness of the middle part in sheet thickness exceeds 800Hv and the bendability falls, so C is less than 0.70%. Preferably, it is 0.50% or less.

"Si: less than 3.00%"

Si is an element contributing to improvement of strength by solution strengthening, so 0.50% may be added as an upper limit from the viewpoint of improvement of strength. On the other hand, even if added in more than 0.50%, the effect of improvement of strength becomes saturated, so 0.50% is the upper limit. Preferably it is 0.30% or less. Si further is an element having the effect of raising the ductility without impairing the hydrogen embrittlement resistance and bendability manifested by control of the structures of the surface layer. In particular, if bending deformation occurs at the time of collision of an automobile, buckling of the hat shaped member causes the deformation to become localized and the load resistance of the member to drop. That is, the member and the maximum load affect not only the strength of the member, but also the ease of buckling. In the state of the member, if the ductility of the steel sheet is high, the deformation region becomes harder to localize. That is, the sheet becomes hard to buckle. Therefore, in a hot stamped member as well, while the ductility is important, in general the ductility of martensite is low. From such a viewpoint, by adding Si in more than 0.50%, it is possible to secure residual austenite in an area percent of 1.0% or more. To improve the ductility, Si is preferably added in more than 0.50%. More preferably, the content is 1.00% or more. On the other hand, if adding 3.00% or more, the residual austenite becomes present in an area rate of 5.0% or more and deterioration of the bendability is invited, so the upper limit is less than 3.00%. Preferably, the content is less than 2.00%.

"Mn: 0.20% or more and less than 3.00%"

Mn is an element contributing to improvement of strength by solution strengthening. From the viewpoint of improvement of strength, with less than 0.20%, the effect is not obtained, so 0.20% or more is added. Preferably the content is 0.70% or more. On the other hand, even if adding 1.50% or more, the effect of improvement of the strength becomes saturated, so less than 1.50% is the upper limit. Mn, further, is an element having the effect of raising the hardenability without impairing the hydrogen embrittlement resistance and bendability manifested by control of the structures of the surface layer. In a hot stamped body, the way of contact with the die is not necessarily uniform. For example, at the vertical wall parts of a hat member etc., the cooling rate easily falls. For this reason, steel sheet is sometimes locally formed with regions with low hardnesses. Deformation concentrates in a local soft part at the time of collision and becomes a cause of cracking, so in securing impact resistance, it is important that the hardenability be raised and the variation in hardness in the stamped body be reduced, i.e., that stable strength be secured. From such a viewpoint, by adding Mn in 1.50% or more, it is possible to raise the hardenability and stably obtain high strength, so Mn is preferably added in 1.50% or more. More preferably, it is 1.70% or more. On the other hand, even if adding 3.00% or more, the effect of strength stability becomes saturated, so the upper limit is less than 3.00%. Preferably, the content is less than 2.00%.

"P: 0.10% or less"

P is an element segregating at the grain boundaries and impairing the strength of the grain boundaries. If more than 0.10%, the strength of the grain boundaries remarkably falls and the hydrogen embrittlement resistance and bendability fall, so P is 0.10% or less. Preferably, it is 0.05% or less. The lower limit is not particularly prescribed, but if reducing this to less than 0.0001%, the dephosphorization cost greatly rises and the result becomes economically disadvantageous, so in practical steel sheet, 0.0001% is the substantive lower limit.

"S: 0.10% or less"

S is an element forming inclusions. If more than 0.10%, inclusions are formed and the hydrogen embrittlement resistance and bendability fall, so S is 0.10% or less. Preferably, it is 0.005% or less. The lower limit is not particularly prescribed, but if reducing this to less than 0.0015%, the desulfurization cost greatly rises and the result becomes economically disadvantageous, so in practical steel sheet, 0.0015% is the substantive lower limit.

"sol. Al: 0.0002% or more and 3.0000% or less"

Al is an element acting to deoxidize the molten steel and make the steel sounder. With less than 0.0002%, the deoxidation is insufficient, so sol. Al is 0.0002% or more. Preferably the content is 0.0010% or more. On the other hand, even if adding more than 3.0000%, the effect becomes saturated, so the content is 3.0000% or less.

"N: 0.01% or less"

N is an impurity element and is an element which forms nitrides and impairs bendability. If more than 0.01%, coarse nitrides are formed and the bendability remarkably falls, so N is 0.01% or less. Preferably the content is 0.0075% or less. The lower limit is not particularly prescribed, but if reducing this to less than 0.0001%, the denitridation cost greatly rises and the result becomes economically disadvantageous, so in practical steel sheet, 0.0001% is the substantive lower limit.

"Ni: 0.01% or more and 3.00% or less"

Ni is an element contributing to improvement of strength by solution strengthening, so may be added as needed. With less than 0.01%, the effect is not obtained, so the content is 0.01% or more. Preferably, the content is 0.50% or more. On the other hand, even if added in more than 3.00%, the effect becomes saturated, so the content is 3.00% or less. Preferably, the content is 2.50% or less.

"Nb: 0.010% or more and 0.150% or less"

Nb is an element contributing to improvement of strength by solution strengthening, so may be added as needed. With less than 0.010%, the effect is not obtained, so the content is 0.010% or more. Preferably, the content is 0.035% or more. On the other hand, even if added in more than 0.150%, the effect becomes saturated, so the content is 0.150% or less. Preferably, the content is 0.120% or less.

"Ti: 0.010% or more and 0.150% or less"

Ti is an element contributing to improvement of strength by solution strengthening, so may be added as needed. With less than 0.010%, the effect is not obtained, so the content is 0.010% or more. Preferably, the content is 0.020% or more. On the other hand, even if added in more than 0.150%, the effect becomes saturated, so the content is 0.150% or less. Preferably, the content is 0.120% or less.

"Mo: 0.005% or more and 1.000% or less"

Mo is an element contributing to improvement of strength by solution strengthening, so may be added as needed. With less than 0.005%, the effect is not obtained, so the content is 0.005% or more. Preferably, the content is 0.010% or more. On the other hand, even if added in more than 1.000%, the effect becomes saturated, so the content is 1.000% or less. Preferably, the content is 0.800% or less.

"B: 0.0005% or more and 0.0100% or less"

B is an element segregating at the grain boundaries and improving the strength of the grain boundaries, so may be added as needed. With less than 0.0005%, the effect of addition is not sufficiently obtained, so 0.0005% or more is added. Preferably, the content is 0.0010% or more. On the other hand, even if added in more than 0.0100%, the effect becomes saturated, so the content is 0.0100% or less. Preferably, the content is 0.0075% or less.

The balance of the chemical constituents of the middle part in sheet thickness consists of Fe and unavoidable impurities. The unavoidable impurities are elements which unavoidably enter from the steel raw materials and/or in the steelmaking process and are allowed in ranges not impairing the characteristics of the hot stamped body of the present invention.

Next, the chemical constituents of the surface layer forming the hot stamped body of the present invention will be explained.

Regarding the constituents of the surface layer, it is preferable that one or more of the C content, Si content, and Mn content be 0.6 time or less the corresponding contents of the elements at the middle part in sheet thickness. In that case, the preferable ranges of the constituents are as follows:

"C: 0.05% or more and less than 0.42%"

C is added to raise the strength. If less than 0.05%, the effect is not obtained, so 0.05% or more is added. From the viewpoint of raising the load resistance as a member and improving the impact characteristics, preferably the content is 0.10% or more. On the other hand, to make the hardness of a surface layer lower than the hardness of the middle part in sheet thickness, it is preferable to make the content smaller than the middle part in sheet thickness. For this reason, the preferable C content of the surface layer is less than 0.42%. Preferably the C content is 0.35% or less.

"Si: less than 2.00%"

Si is an element contributing to improvement of strength by solution strengthening, so is added for raising the strength. To make the hardness of the surface layer lower than the hardness of the middle part in sheet thickness, it is preferable to make this smaller in content than the middle part in sheet thickness. For this reason, the preferable S content of the surface layer is less than 2.00%, preferably 1.50% or less, more preferably 0.30% or less, still more preferably 0.20% or less.

"Mn: 0.01% or more and less than 1.80%"

Mn is an element contributing to improvement of strength by solution strengthening, so is added for raising the strength. To make the hardness of the surface layer lower than the hardness of the middle part in sheet thickness, it is preferably smaller in content than the middle part in sheet thickness. For this reason, the preferable Mn content of the surface layer is less than 1.80%, preferably 1.40% or less, more preferably less than 0.90%, still more preferably 0.70% or less.

The other constituents of the surface layer are not particularly limited. In general, a surface layer may optionally contain one or more of the following constituents in addition to C, Si, and Mn.

"P: 0.10% or less"

P is an element segregating at the grain boundaries and impairing the strength of the grain boundaries. If more than 0.10%, the strength of the grain boundaries remarkably falls and the hydrogen embrittlement resistance and bendability fall, so P is 0.10% or less. Preferably, it is 0.05% or less. The lower limit is not particularly prescribed, but if reducing this to less than 0.0001%, the dephosphorization cost greatly rises and the result becomes economically disadvantageous, so in practical steel sheet, 0.0001% is the substantive lower limit.

"S: 0.10% or less"

S is an element forming inclusions. If more than 0.10%, inclusions are formed and the hydrogen embrittlement resistance and bendability fall, so S is 0.10% or less. Preferably, it is 0.005% or less. The lower limit is not particularly prescribed, but if reducing this to less than 0.0015%, the desulfurization cost greatly rises and the result becomes economically disadvantageous, so in practical steel sheet, 0.0015% is the substantive lower limit.

"sol. Al: 0.0002% or more and 3.0000% or less"

Al is an element acting to deoxidize the molten steel and make the steel sounder. With less than 0.0002%, the deoxidation is insufficient, so the sol. Al is 0.0002% or more. Preferably the content is 0.0010% or more. On the other hand, even if adding more than 3.0000%, the effect becomes saturated, so the content is 3.0000% or less.

"N: 0.01% or less"

N is an impurity element and is an element which forms nitrides and impairs bendability. If more than 0.01%, coarse nitrides are formed and the bendability remarkably falls, so N is 0.01% or less. Preferably the content is 0.0075% or less. The lower limit is not particularly prescribed, but if reducing this to less than 0.0001 %, the denitridation cost greatly rises and the result becomes economically disadvantageous, so in practical steel sheet, 0.0001% is the substantive lower limit.

"Ni: 0.01% or more and 3.00% or less"

Ni is an element contributing to improvement of strength by solution strengthening, so may be added as needed. With less than 0.01%, the effect is not obtained, so the content is 0.01% or more. Preferably, the content is 0.50% or more. On the other hand, even if added in more than 3.00%, the effect becomes saturated, so the content is 3.00% or less. Preferably, the content is 2.50% or less.

"Nb: 0.010% or more and 0.150% or less"

Nb is an element contributing to improvement of strength by solution strengthening, so may be added as needed. With less than 0.010%, the effect is not obtained, so the content is 0.010% or more. Preferably, the content is 0.035% or more. On the other hand, even if added in more than 0.150%, the effect becomes saturated, so the content is 0.150% or less. Preferably, the content is 0.120% or less.

"Ti: 0.010% or more and 0.150% or less"

Ti is an element contributing to improvement of strength by solution strengthening, so may be added as needed. With less than 0.010%, the effect is not obtained, so the content is 0.010% or more. Preferably, the content is 0.020% or more. On the other hand, even if added in more than 0.150%, the effect becomes saturated, so the content is 0.150% or less. Preferably, the content is 0.120% or less.

"Mo: 0.005% or more and 1.000% or less"

Mo is an element contributing to improvement of strength by solution strengthening, so may be added as needed. With less than 0.005%, the effect is not obtained, so the content is 0.005% or more. Preferably, the content is 0.010% or more. On the other hand, even if added in more than 1.000%, the effect becomes saturated, so the content is 1.000% or less. Preferably, the content is 0.800% or less.

"B: 0.0005% or more and 0.0100% or less"

B is an element segregating at the grain boundaries and improving the strength of the grain boundaries, so may be added as needed. With less than 0.0005%, the effect of addition is not sufficiently obtained, so 0.0005% or more is added. Preferably, the content is 0.0010% or more. On the other hand, even if added in more than 0.0100%, the effect becomes saturated, so the content is 0.0100% or less. Preferably, the content is 0.0075% or less.
The balance of the chemical constituents of the surface part consists of Fe and unavoidable impurities. The unavoidable impurities are elements which unavoidably enter from the steel raw materials and/or in the steelmaking process and are allowed in ranges not impairing the characteristics of the hot stamped body of the present invention.
Next, the microstructure of the hot stamped body of the present invention will be explained.

"Middle part in sheet thickness has a hardness of 500Hv or more and 800Hv or less"

If the hardness of the middle part in sheet thickness is 500Hv or more, as the tensile strength of the hot stamped body, 1500 MPa or more can be secured. Preferably, it is 600Hv or more. On the other hand, if the hardness of the middle part in sheet thickness is more than 800Hv, the difference in hardness between the surface layer and the intermediate layer becomes too large and deterioration of the bendability is invited, and therefore 800Hv is the upper limit. Preferably the hardness is 720Hv or less.

"Middle part in sheet thickness comprises, by area percent, 1.0% or more and less than 5.0% of residual austenite"

By controlling the Si content at the middle part in sheet thickness to more than 0.50% and less than 3.00% to make the middle part in sheet thickness contain residual austenite as a metal structure in an area percent of 1.0% or more and less than 5.0%, it is possible improve the ductility of the obtained hot stamped body. Preferably the content is 2.0% or more. On the other hand, if the area percent of the residual austenite becomes 5.0% or more, deterioration of the bendability is invited, so the upper limit is less than 5.0%. Preferably, the content is less than 4.5%.
In the present invention, the area percent of the residual austenite is measured by the following method. A sample is taken from a hot stamped member and ground down at its surface to a sheet thickness 1/4 depth from the normal direction of the rolling surface for use for X-ray diffraction measurement. From the image obtained by the X-ray diffraction method using Kα rays of Mo, the area percent Vy of residual austenite was determined using the following formula:

$$V\gamma=(2/3)\{100/(0.7\times\alpha(211)/\gamma(220)+1)\}+(1/3)\{100/(0.78\times\alpha(211)/\gamma(311)+1)\}$$

Here, $\alpha(211)$ is the reflection surface intensity at the (211) face of ferrite, $\gamma(220)$ is the reflection surface intensity at the (220) face of austenite, and $\gamma(311)$ is the reflection surface intensity at the (311) face of austenite.

"The surface layer has a hardness change $\Delta H_1$ in the sheet thickness direction of 100Hv or more and less than 200Hv, and the intermediate layer has a hardness change $\Delta H_2$ in the sheet thickness direction of 10Hv or more and less than 50Hv"

In the present invention, the "surface layer" means the region from both sides or one side of the hot stamped body to 8% of the thickness of the hot stamped body, i.e., each surface layer has a thickness of 8% of the thickness of the hot stamped body. Similarly, in the present invention, the "intermediate layer" means the part from both sides or one side of the hot stamped body to 20% of the thickness of the hot stamped body except for the above surface layer, i.e., each intermediate layer has a thickness of 12% of the thickness of the hot stamped body. In the present invention, the "middle part in sheet thickness" means the part other than the surface layer and intermediate layer of the hot stamped body, i.e., the middle part in sheet thickness has a thickness of 60% of the thickness of the hot stamped body in the case of a hot stamped body with a surface layer and intermediate layer arranged at both sides of the middle part in sheet thickness and has a thickness of 80% of the thickness of the hot stamped body in the case of a hot stamped body with a surface layer and intermediate layer arranged at only one side of the middle part in sheet thickness. Here, $\Delta H_1$ shows the hardness change in sheet thickness direction at the surface layer, while $\Delta H_2$ shows the hardness change in sheet thickness direction at the intermediate layer. The inventors studied this in depth and as a result learned that from the viewpoint of the effects on the bendability, etc., the hardness change in this region ($\Delta H_1$, $\Delta H_2$) is important. It was learned that if $\Delta H_1$ is 100Hv or more and less than 200Hv, an excellent hydrogen embrittlement resistance is secured while an excellent bendability is obtained. Because of such a good bendability, it is possible to ease the stress occurring due to bending deformation, etc., at the time of impact and suppress fracture and cracking, and therefore it is possible to achieve excellent impact resistance at the hot stamped body. On the other hand, if $\Delta H_1$ becomes 100Hv or more, the effect of easing the stress at the time of bending deformation is obtained. Therefore, the lower limit is 100Hv, preferably 110Hv or more, more preferably 120Hv or more. Further, if $\Delta H_1$ is 200Hv or more, penetration of hydrogen from the hot stamped body surface is aggravated and deterioration of the hydrogen embrittlement resistance is invited. Therefore, the upper limit is less than 200Hv. Preferably, it is 190Hv, more preferably 180Hv or less.

Similarly, if $\Delta H_2$ is 10Hv or more and less than 50Hv, excellent bendability can be obtained. With an $\Delta H_2$ of less than 50Hv, the effect of easing the concentration of stress at the time of bending deformation was raised and excellent bendability could be obtained. Therefore, the upper limit is less than 50Hv. Preferably it is 45Hv or less, more preferably 40Hv or less. On the other hand, if $\Delta H_2$ is less than 10Hv, it becomes difficult to ease the concentration of stress at the time of bending deformation and the bendability remarkably deteriorates. Therefore, the lower limit is 10Hv. Preferably, it is 15Hv or more, more preferably 20Hv or more.

The method of measurement of the hardness of the middle part in sheet thickness is as follows: The cross-section vertical to the sheet surface of the hot stamped body was taken to prepare a sample of the measurement surface which was supplied to a hardness test. The method of preparing the measurement surface may be based on JIS Z 2244. For example, #600 to #1500 silicon carbide paper may be used to polish the measurement surface, then a solution of particle size 1 $\mu$m to 6 $\mu$m diamond powder dispersed in alcohol or another diluent or pure water may be used to finish the sample to a mirror surface. The hardness test may be performed by the method described in JIS Z 2244. A micro-Vickers hardness tester is used to measure 10 points at the 1/2 position of thickness of the hot stamped body by a load of 1 kgf and intervals of 3 times or more of the dents. The average value was defined as the hardness of the middle part in sheet thickness.

Next, the method of measurement of the hardness of the surface layer and intermediate layer will be explained. The cross-section vertical to the sheet surface of the hot stamped body is taken to prepare a sample of the measurement surface which is then supplied to a hardness test. The measurement surface is prepared so that there is extremely little unevenness and there is no drooping near the surface so as to enable accurate measurement of the hardness near the surface of the hot stamped body. For example, a cross section polisher made by JEOL is used for sputtering the measurement surface by an argon ion beam. At this time, to keep striation-like unevenness from occurring at the measurement surface, a sample rotation holder made by JEOL may be used so as to irradiate the measurement surface by the argon ion beam from 360 degree directions.

In the case of a hot stamped body with a surface layer and intermediate layer arranged at both sides of the middle part in sheet thickness, the sample with the prepared measurement surface is measured two times using a micro-Vickers hardness tester. The first time, the region from the first surface of the hot stamped body to 20% of the thickness of the hot stamped body is measured in a direction perpendicular to the sheet surface (sheet thickness direction) by a load of 1 kgf and intervals of 3 times or more the dents. At this time, the total of the measurement points differs depending on the thickness of the hot stamped body, but to calculate the later explained $\Delta H_1$ and $\Delta H_2$, it is sufficient to perform measurement for at least two points or more. The measurement position at the surfacemost side of the hot stamped body is made in the region within 20 $\mu$m from the sheet surface (if there is a plated layer, directly under the plated layer or directly under the alloy layer between the plated layer and the matrix material). The second measurement is performed from the surface of the hot stamped body at the opposite side to the first time. That is, the region from the second surface of the hot stamped body to 20% of the thickness is measured in a direction vertical to the sheet surface (sheet thickness direction) by a load of 1 kgf and intervals of 3 times or more the dents. The measurement position at the surfacemost side of the hot stamped body is made the region from the sheet surface (if there is a plated layer, directly under the plated layer or directly under the alloy layer between the plated layer and the matrix material) to within 20 $\mu$m.

In the case of a hot stamped body with a surface layer and intermediate layer arranged at only one side of the middle part in sheet thickness, the sample with the prepared measurement surface is measured using a micro-Vickers hardness tester in the region from the surface layer of the hot stamped body to 20% of the thickness of the hot stamped body in a direction perpendicular to the sheet surface (sheet thickness direction) by a load of 1 kgf and intervals of 3 times or more the dents. At this time, the total of the measurement points differs depending on the thickness of the hot stamped body, but to calculate the later explained $\Delta H_1$ and $\Delta H_2$, it is sufficient to perform measurement for at least two points or more. The measurement position at the surfacemost side of the hot stamped body is made the region from the sheet surface (if there is a plated layer, directly under the plated layer or directly under the alloy layer between the plated layer and the matrix material) to within 20 μm.

Next, the method of calculation of $\Delta H_1$ in the case of a hot stamped body with a surface layer and intermediate layer arranged at both sides of the middle part in sheet thickness will be explained. First, the formula (1) is used to calculate the gradient $\Delta a$ of hardness of the first surface side surface layer from all of the measurement points included in the region from the first surface to thickness 8% of the hot stamped body. Here, ai is the distance from the first surface at the i-th measurement point (μm), ci is the Vickers hardness at ai (Hv), and "n" is the total of all measurement points included in the region from the first surface to thickness 8%. Next, all measurement points included in the region from the second surface to the thickness 8% of the hot stamped body were used to calculate the gradient $\Delta b$ of the hardness of the second surface side surface layer by the formula (2). Here, bi is the distance from the second surface at the i-th measurement point (μm), di is the Vickers hardness at bi (Hv), and "m" is the total of all measurement points included in the region from the second surface to thickness 8%. After calculating $\Delta a$ and $\Delta b$, formula (3-1) is used to calculate the hardness change $\Delta H_1$ in the sheet thickness direction of the surface layer. Here, "t" is the sheet thickness of the hot stamped body (μm).

On the other hand, in the case of a hot stamped body with a surface layer and intermediate layer arranged at only one side of the middle part in sheet thickness, formula (3-2) may be used to calculate the hardness change $\Delta H_1$ in the sheet thickness direction of the surface layer.

Next, the method of calculation of $\Delta H_2$ in the case of a hot stamped body with a surface layer and intermediate layer arranged at both sides of the middle part in sheet thickness will be explained. First, the formula (4) is used to calculate the gradient $\Delta A$ of hardness of the first surface side intermediate layer from all of the measurement points included in the region from the position of thickness 8% to the position of thickness 20% at the first surface side of the hot stamped body. Here, Ai is the distance from the first surface at the i-th measurement point (μm), Ci is the Vickers hardness at $A_i$ (Hv), and N is the total of all measurement points included at the region from the position of the thickness 8% to the position of the 20% thickness at the first surface side. Next, the formula (5) is used to calculate the gradient $\Delta B$ of hardness of the second surface side intermediate layer from all of the measurement points included in the region from the position of thickness 8% to the position of thickness 20% at the second surface side of the hot stamped body. Here, $B_i$ is the distance from second surface at the i-th measurement point (μm), Di is the Vickers hardness at Bi (Hv), and M is the total of all measurement points included at the region from the thickness 8% to 20% at the second surface side. After calculating $\Delta A$ and $\Delta B$, formula (6-1) is used to calculate the hardness change $\Delta H_2$ in the sheet thickness direction of the intermediate layer.

On the other hand, in the case of a hot stamped body with a surface layer and intermediate layer arranged at only one side of the middle part in sheet thickness, formula (6-2) may be used to calculate the hardness change $\Delta H_2$ in the sheet thickness direction of the surface layer.

[Mathematical 1]

$$\Delta a = \frac{n\sum_{i=1}^{n} a_i c_i - \sum_{i=1}^{n} a_i \sum_{i=1}^{n} c_i}{\sum_{i=1}^{n} a_i^2 - \left(\sum_{i=1}^{n} a_i\right)^2} \quad \cdots\cdots \text{Formula (1)}$$

$$\Delta b = \frac{m\sum_{i=1}^{m} b_i d_i - \sum_{i=1}^{m} b_i \sum_{i=1}^{m} d_i}{\sum_{i=1}^{m} b_i^2 - \left(\sum_{i=1}^{m} b_i\right)^2} \quad \cdots\cdots \text{Formula (2)}$$

$$\Delta H_1 = (\Delta a + \Delta b)/2 \times (t \times 0.08) \quad \cdots\cdots \text{Formula (3-1)}$$

$$\Delta H_1 = \Delta a \times (t \times 0.08) \quad \cdots\cdots \text{Formula (3-2)}$$

$$\Delta A = \frac{N\sum_{i=1}^{N} A_iC_i \;-\; \sum_{i=1}^{N} A_i \sum_{i=1}^{N} C_i}{\sum_{i=1}^{N} A^2 - \left(\sum_{i=1}^{N} A_i\right)^2} \quad \cdots\cdots \text{Formula (4)}$$

$$\Delta B = \frac{M\sum_{i=1}^{M} B_iD_i \;-\; \sum_{i=1}^{M} B_i \sum_{i=1}^{M} D_i}{\sum_{i=1}^{M} B_i^2 - \left(\sum_{i=1}^{M} B_i\right)^2} \quad \cdots\cdots \text{Formula (5)}$$

$$\Delta H_2 = (\Delta A + \Delta B)/2 \times (t \times 0.12) \quad \cdots\cdots \text{Formula (6-1)}$$

$$\Delta H_2 = \Delta A \times (t \times 0.12) \quad \cdots\cdots \text{Formula (6-2)}$$

where,

$\Delta H_1$: Hardness change in sheet thickness direction at surface layer (Hv)
$\Delta a$: Gradient of hardness of first surface side surface layer (Hv/$\mu$m)
$a_i$: Distance from first surface at i-th measurement point ($\mu$m)
$c_i$: Vickers hardness at ai (Hv)
n: Total of all measurement points included at first surface side surface layer
$\Delta b$: Gradient of hardness of second surface side surface layer (Hv/$\mu$m)
$b_i$: Distance from second surface at i-th measurement point ($\mu$m)
$d_i$: Vickers hardness at bi (Hv)
m: Total of all measurement points included at second surface side surface layer
$\Delta H_2$: Hardness change in sheet thickness direction at intermediate layer (Hv)
$\Delta A$: Gradient of hardness of first surface side intermediate layer (Hv/$\mu$m)
$A_i$: Distance from first surface at i-th measurement point ($\mu$m)
$C_i$: Vickers hardness at $A_i$ (Hv)
N: Total of all measurement points included at first surface side intermediate layer
$\Delta B$: Gradient of hardness at second surface side intermediate layer (Hv/$\mu$m)
$B_i$: Distance from second surface at i-th measurement point ($\mu$m)
$D_i$: Vickers hardness at Bi (Hv)
M: Total of all measurement points included at second surface side intermediate layer
t: Sheet thickness ($\mu$m).

The surface of each surface layer of the hot stamped body may be formed with a plated layer for the purpose of improving the corrosion resistance. The plated layer may be either an electroplated layer or a hot dip plated layer. An electroplated layer includes, for example, an electrogalvanized layer, electro Zn-Ni alloy plated layer, etc.

A "hot dip plated layer", for example, includes a hot dip galvanized layer, a hot dip galvannealed layer, a hot dip aluminum plated layer, a hot dip Zn-Al alloy plated layer, a hot dip Zn-Al-Mg alloy plated layer, a hot dip Zn-Al-Mg-Si alloy plated layer, etc. The amount of deposition of the plated layer is not particularly limited and may be a general amount of deposition.

Next, the mode of the method for obtaining the hot stamped body of the present invention will be explained. The following explanation is intended to simply illustrate the method for obtaining the hot stamped body of the present invention and is not meant to limit the hot stamped body of the present invention to one obtained from a double-layer steel sheet obtained by stacking two steel sheets as explained below. For example, it is also possible to decarburize a single layer steel sheet to soften its surface layer part to obtain high strength steel sheet comprised of a surface layer and middle part in sheet thickness and to heat treat this in the same way as a double-layer steel sheet to produce the body.

A matrix steel sheet satisfying the above constituents in middle part in sheet thickness was produced, ground at both or one surface to remove the surface oxides, then welded with surface layer steel sheet at both surfaces or one surface of the matrix steel sheet by arc welding. It is preferable to superpose a surface layer steel sheet with one or more of the C content, Si content, and Mn content of the surface layer steel sheet of 0.6 time or less the content of the corresponding element of the matrix steel sheet. The reason is not necessarily clear, but the inventors investigated hot stamped bodies exhibiting excellent bendability and as a result one or more of the C content, Si content, and Mn content of the surface layer steel sheet was 0.6 time or less the content of the corresponding element of the matrix steel sheet.

The above multilayer member (double-layer steel sheet) may be hot rolled, cold rolled, hot stamped, continuously hot dip plated, etc., to obtain the high strength steel sheet according to the present invention, more specifically the hot stamped body.

For example, in the case of obtaining hot rolled steel sheet, the double-layer steel sheet prepared by the above method is preferably held at a 1100°C to 1350°C temperature for 60 minutes or more. By performing such heat treatment, it is possible to control the hardness change $\Delta H_1$ in the sheet thickness direction at the surface layer after hot pressing to 100Hv or more and less than 200Hv. Further, due to the above heat treatment, it is possible to cause elements to diffuse between the matrix steel sheet and the surface layer steel sheet to form an intermediate layer between the two and, furthermore, to control the hardness change $\Delta H_2$ in the sheet thickness direction at the intermediate layer after hot pressing to 10Hv or more and less than 50Hv. In contrast, with a heating temperature of less than 1100°C, the hardness change $\Delta H_1$ in the sheet thickness direction at the surface layer after hot pressing becomes more than 200Hv and the hardness change $\Delta H_2$ in the sheet thickness direction at the intermediate layer after hot pressing becomes less than 10Hv. In this case, penetration of hydrogen from the hot stamped body surface is aggravated, deterioration of the hydrogen embrittlement resistance is invited, and, furthermore, good bendability cannot be obtained. Therefore, the lower limit is 1100°C. On the other hand, if the heating temperature exceeds 1350°C, $\Delta H_1$ becomes less than 10Hv and, furthermore, $\Delta H_2$ ends up exceeding 200Hv and a good bendability cannot be obtained. Therefore, the upper limit is 1350°C. The heating holding operation is preferably performed for 60 minutes or more. The upper limit is not particularly limited, but if holding for more than 300 minutes, the heating cost greatly rises and the result becomes economically disadvantageous. Therefore, in actual operation, 300 minutes is the substantive upper limit.

Further, to promote more the formation of the intermediate layer in the present invention, the hot rolling after the above heat treatment of the double-layer steel sheet preferably includes rough rolling and finish rolling with the rough rolling being performed two times or more under conditions of a rough rolling temperature of 1100°C or more, a reduction rate of sheet thickness per pass of 5% or more and less than 50%, and a time between passes of 3 seconds or more.

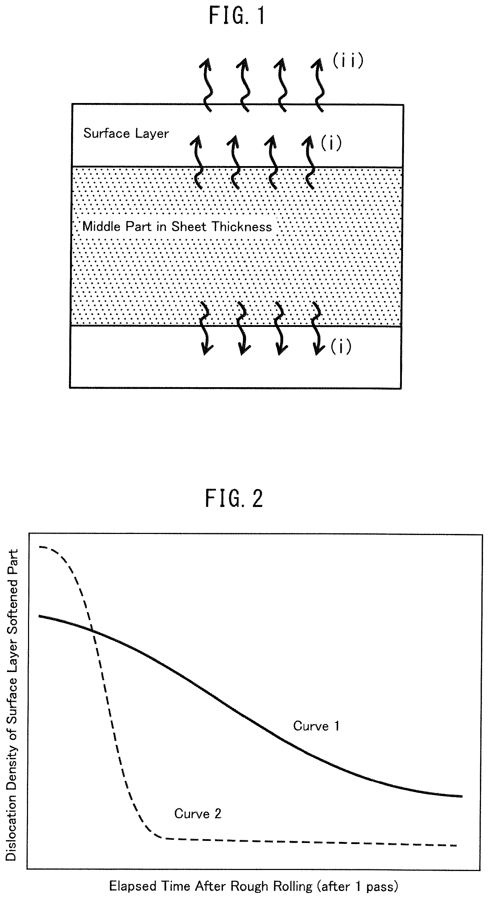

Specifically, to promote more the formation of the intermediate layer in the present invention, the concentrations of alloy elements, in particular C atoms, have to be controlled to become more moderately distributed. The distribution of concentration of C is obtained by diffusion of C atoms. The diffusion frequency of C atoms increases the higher the temperature. Therefore, to control the C concentration, control in the rough rolling from the hot rolling heating becomes important. In hot rolling heating, to promote the diffusion of C atoms, the heating temperature has to be high. Preferably, it is 1100°C or more and 1350°C or less, more preferably more than 1150°C and 1350°C or less. With hot rolled heating, the changes of (i) and (ii) shown in FIG. 1 occur. (i) shows the diffusion of C atoms from the middle part in sheet thickness to the surface layer, while (ii) shows the decarburization reaction of C being desorbed from the surface layer to the outside. A distribution occurs in the concentration of C due to the balance between this diffusion of C atoms and the desorption reaction of (i) and (ii). With less than 1100°C, the reaction of (i) is insufficient, so the preferable distribution of the concentration of C cannot be obtained. On the other hand, with more than 1350°C, the reaction of (ii) excessively occurs, so similarly a preferable distribution of concentration cannot be obtained.

After adjusting the hot rolling heating temperature to obtain the preferable distribution of concentration of C, to obtain a further optimum distribution of concentration of C, pass control in rough rolling becomes extremely important. Rough rolling is performed two times or more under conditions of a rough rolling temperature of 1100°C or more, a reduction rate of sheet thickness per pass of 5% or more and less than 50%, and a time between passes of 3 seconds or more. This is so as to promote the diffusion of C atoms of (i) in FIG. 1 by the strain introduced in the rough rolling. Even if using an ordinary method to rough roll and finish roll a slab controlled in concentration of C to a preferable state by hot rolling heating, the sheet thickness will be reduced without the C atoms sufficiently diffusing in the surface layer. Therefore, if manufacturing hot rolled steel sheet of a thickness of several mm from a slab having a thickness more than 200 mm by an ordinary hot rolling, the result will be a steel sheet changing rapidly in concentration of C at the surface layer. A moderate hardness change will no longer be able to be obtained. The method discovered to solve this is the above pass control of the rough rolling. The diffusion of C atoms is greatly affected by not only the temperature, but also the strain (dislocation density). In particular, compared with lattice diffusion, with dislocation diffusion, the diffusion frequency becomes 10 times or more higher, so steps have to be taken to leave the dislocation density while rolling to reduce the sheet thickness. Curve 1 of FIG. 2 shows the change in the dislocation density after a rolling pass in the case where the reduction rate of sheet thickness per pass in the rough rolling is small. It will be understood that strain remains over a long time period. By causing strain to remain at the surface layer over a long time period in this way, C atoms sufficiently disperse in the surface layer and the optimum distribution of concentration of C can be obtained. On the other hand, curve 2 shows the change in dislocation density in the case where the reduction rate of sheet thickness is large.

If the amount of strain introduced by the rolling rises, recovery is easily promoted and the dislocation density rapidly falls. For this reason, to obtain the optimal distribution of concentration of C, it is necessary to prevent the occurrence of a change in dislocation density like the curve 2. From such a viewpoint, the upper limit of the reduction rate of sheet thickness per pass becomes less than 50%. To promote the diffusion of C atoms at the surface layer, certain amounts of dislocation density and holding time have to be secured, so the lower limit of the reduction rate of sheet thickness becomes 5%. As the time between passes, 3 seconds or more has to be secured.

The finish rolling may be finish rolling performed under usual conditions. For example, it may be performed with a finish temperature of 810°C or more in temperature region. The subsequent following cooling conditions also do not have to be prescribed. The sheet is coiled at the 750°C or less temperature region. Further, the hot rolled steel sheet may also be heat treated again for the purpose of softening it.

The heating, shaping, and cooling steps at the time of hot stamping may also be performed under usual conditions. For example, hot rolled steel sheet obtained by uncoiling hot rolled steel sheet coiled in the hot rolling step, cold rolled steel sheet obtained by uncoiling and cold rolling coiled hot rolled steel sheet, or steel sheet obtained by plating cold rolled steel sheet, heating this by a 0.1°C/s to 200°C/s heating rate up to 810°C or more and 1000°C or less in temperature, and holding it at this temperature is formed into the required shape by the usual hot stamping. The holding time may be set according to the mode of forming. Therefore, although this is not particularly limited, the holding time may be 30 seconds or more and 600 seconds or less, Hot stamped body is cooled to room temperature. The cooling rate may also be set to a usual condition. For example, the average cooling rate in the temperature region from the heating temperature to 400°C may be 50°C/s or more. In the case of steel sheet with an Si content at the middle part in sheet thickness of more than 0.50% and less than 3.00% and an Mn content at the middle part in sheet thickness of 0.20% or more and less than 1.50% and steel sheet with an Si content at the middle part in sheet thickness of more than 0.50% and less than 3.00% and an Mn content at the middle part in sheet thickness of 1.50% or more and less than 3.00%, for the purpose of increasing the amount of formation of residual austenite to improve the ductility, it is preferable to control the average cooling rate at the cooling after heating and holding at the 200°C to 400°C temperature region to less than 50°C/s. Further, for the purpose of adjusting the strength etc., it is possible to temper the stamped body cooled down to room temperature in the range of 150°C to 600°C.

The cold rolling may be cold rolling performed by a usual rolling reduction, for example, 30 to 90%. The hot rolled steel sheet and the cold rolled steel sheet include sheets as hot rolled and cold rolled and also steel sheets obtained by recrystallization annealing hot rolled steel sheet or cold rolled steel sheet under usual conditions and steel sheets obtained by skin pass rolling under usual conditions. The plating conditions are not particularly limited and may be usual conditions. Hot rolled steel sheet, cold rolled steel sheet, or steel sheet obtained by recrystallization annealing and/or skin pass rolling cold rolled steel sheet are plated under usual plating conditions according to need.

EXAMPLES

Next, examples of the present invention will be explained, but the conditions in the examples are just illustrations of conditions employed for confirming the workability and advantageous effects of the present invention. The present invention is not limited to the illustration of examples. The present invention can employ various conditions so long as not departing from the gist of the present invention and achieving the object of the present invention.

In the examples, the hardness of a hot stamped steel sheet was measured by the method explained above and the hardness of the middle part in sheet thickness, the hardness change $\Delta H_1$ in the sheet thickness direction of the surface layer, and the hardness change $\Delta H_2$ in the sheet thickness direction of the intermediate layer were calculated.

Further, a tensile test of the hot stamped steel sheet was performed. The tensile test was performed by preparing a No. 5 test piece described in JIS Z 2201 and following the test method described in JIS Z 2241.

The hydrogen embrittlement resistance of the hot stamped body was evaluated using a test piece cut out from the stamped body. In general, a hot stamped body is joined with other parts using spot welding or another joining method. Depending upon the precision of the shape of the part, the hot stamped body will be subjected to twisting and stress will be applied. The stress differs depending on the position of the part. Accurately calculating this is difficult, but if there is no delayed fracture at the yield stress, it is believed there is no problem in practical use. Therefore, a sheet thickness 1.2 mm×width 6 mm×length 68 mm test piece was cut out from the stamped body, a strain corresponding to the yield stress was imparted in a four-point bending test, then the test piece was immersed in pH3 hydrochloric acid for 100 hours. The presence of any cracking was used to evaluate the hydrogen embrittlement resistance. A case of no cracking was marked as passing ("good") and a case with cracking was marked as failing ("poor").

The impact resistance of the hot stamped body was evaluated by the bendability of the hot stamped body based on the VDA standard (VDA238-100) prescribed by the German Association of the Automotive Industry under the following measurement conditions. In the present invention, the displacement at the time of maximum load obtained in the bending test was converted to angle by the VDA standard to find maximum bending angle.

Test piece dimensions: 60 mm (rolling direction)×60 mm (direction vertical to rolling) or 30 mm (rolling direction)×60 mm (direction vertical to rolling)
Bending ridgeline: direction perpendicular to rolling
Test method: roll support, punch pressing
Roll diameter: φ30 mm
Punch shape: tip R=0.4 mm
Distance between rolls: 2.0×sheet thickness (mm)+0.5mm
Pressing rate: 20 mm/min
Tester: SHIMAZU AUTOGRAPH 20kN

[Example A]

A matrix steel sheet having the chemical constituents shown in Table 1 was ground on its surface to remove surface oxides, then a surface layer steel sheet having the chemical constituents shown in Table 2 was welded with both surfaces or one surface by arc welding. The total thickness of the surface layer steel sheet and the matrix steel sheet after arc welding is 200 mm to 300 mm and the thickness of the surface layer steel sheet is 1/3 or so the thickness of the matrix steel sheet (in the case of a single side, 1/4 or so). Manufacturing Nos. 1 to 36 and 38 to 40 are steels with surface layer steel sheets welded to both surfaces, while Manufacturing No. 37 is steel with a surface layer steel sheet welded to only one surface. These multilayer steel sheets are hot rolled and/or cold rolled as shown in Table 3. The obtained steel sheets are heat treated as shown in Table 3 and hot stamped to produce stamped bodies. Table 4 shows the microstructures and mechanical characteristics of the hot stamped steel sheets (hot stamped bodies). The chemical constituents analyzed at sheet thickness 1/2 positions of samples taken from the hot stamped steel sheets and at positions of 20 μm from the surfaces (positions within surface layers) are equivalent to the chemical constituents of the matrix steel sheets and surface layer steel sheets shown in Tables 1 and 2.

[Table 1-1]

Table 1-1

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 1 | 0.21 | 0.20 | 1.24 | 0.012 | 0.0018 | 0.043 | 0.0032 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 3 | 0.32 | 0.16 | 1.27 | 0.009 | 0.0003 | 0.041 | 0.0035 | 0 | 0 | 0 | 0 | 0 |
| 4 | 0.43 | 0.16 | 1.28 | 0.007 | 0.0003 | 0.043 | 0.0030 | 0 | 0 | 0 | 0 | 0 |
| 5 | **0.11** | 0.16 | 1.28 | 0.007 | 0.0003 | 0.043 | 0.0030 | 0 | 0 | 0 | 0 | 0 |
| 6 | 0.22 | 0.16 | 1.28 | 0.007 | 0.0003 | 0.043 | 0.0030 | 0 | 0 | 0 | 0 | 0 |
| 7 | 0.27 | 0.16 | 1.28 | 0.007 | 0.0003 | 0.043 | 0.0030 | 0 | 0 | 0 | 0 | 0 |
| 8 | 0.30 | 0.16 | 1.28 | 0.007 | 0.0003 | 0.043 | 0.0030 | 0 | 0 | 0 | 0 | 0 |
| 9 | **0.74** | 0.16 | 1.28 | 0.007 | 0.0003 | 0.043 | 0.0030 | 0 | 0 | 0 | 0 | 0 |
| 10 | 0.28 | 0.41 | 1.28 | 0.007 | 0.0003 | 0.043 | 0.0030 | 0 | 0 | 0 | 0 | 0 |
| 11 | 0.26 | 0.16 | **0.11** | 0.007 | 0.0003 | 0.043 | 0.0030 | 0 | 0 | 0 | 0 | 0 |
| 12 | 0.29 | 0.16 | 0.80 | 0.007 | 0.0003 | 0.043 | 0.0030 | 0 | 0 | 0 | 0 | 0 |
| 13 | 0.27 | 0.16 | 1.28 | 0.007 | 0.0003 | 0.043 | 0.0030 | 0.02 | 0 | 0 | 0 | 0 |
| 14 | 0.27 | 0.16 | 1.28 | 0.007 | 0.0003 | 0.043 | 0.0030 | 0 | 0.047 | 0 | 0 | 0 |
| 15 | 0.27 | 0.16 | 1.28 | 0.007 | 0.0003 | 0.043 | 0.0030 | 0 | 0 | 0.023 | 0 | 0 |
| 16 | 0.28 | 0.16 | 1.28 | 0.007 | 0.0003 | 0.043 | 0.0030 | 0 | 0 | 0 | 0.01 | 0 |
| 17 | 0.27 | 0.16 | 1.28 | 0.007 | 0.0003 | 0.043 | 0.0030 | 0 | 0 | 0 | 0 | 0.0017 |
| 1 | 0.21 | 0.20 | 1.24 | 0.012 | 0.0018 | 0.043 | 0.0032 | 0 | 0 | 0 | 0 | 0 |

(continued)

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 1 | 0.21 | 0.20 | 1.24 | 0.012 | 0.0018 | 0.043 | 0.0032 | 0 | 0 | 0 | 0 | 0 |
| 1 | 0.21 | 0.20 | 1.24 | 0.012 | 0.0018 | 0.043 | 0.0032 | 0 | 0 | 0 | 0 | 0 |

In the table, fields in which chemical constituent is "0" indicate corresponding constituent is not intentionally added.

[Table 1-2]

Table 1-2

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 3 | 0.32 | 0.16 | 1.27 | 0.009 | 0.0003 | 0.041 | 0.0035 | 0 | 0 | 0 | 0 | 0 |
| 3 | 0.32 | 0.16 | 1.27 | 0.009 | 0.0003 | 0.041 | 0.0035 | 0 | 0 | 0 | 0 | 0 |
| 3 | 0.32 | 0.16 | 1.27 | 0.009 | 0.0003 | 0.041 | 0.0035 | 0 | 0 | 0 | 0 | 0 |
| 4 | 0.43 | 0.16 | 1.28 | 0.007 | 0.0003 | 0.043 | 0.0030 | 0 | 0 | 0 | 0 | 0 |
| 4 | 0.43 | 0.16 | 1.28 | 0.007 | 0.0003 | 0.043 | 0.0030 | 0 | 0 | 0 | 0 | 0 |
| 4 | 0.43 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 18 | 0.66 | 0.16 | 1.28 | 0.007 | 0.0003 | 0.043 | 0.0030 | 0 | 0 | 0 | 0 | 0 |
| 18 | 0.64 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |
| 2 | 0.28 | 0.16 | 1.28 | 0.007 | 0.0003 | 0.043 | 0.0030 | 0 | 0 | 0 | 0 | 0 |

In the table, fields in which chemical constituent is "0" indicate corresponding constituent is not intentionally added.

[Table 2-1]

Table 2-1

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 1 | 1 | 0.084 | 0.094 | 0.595 | 0.010 | 0.0014 | 0.041 | 0.0031 | 0 | 0 | 0 | 0 | 0 |
| 2 | 2 | 0.140 | 0.086 | 0.576 | 0.012 | 0.0015 | 0.040 | 0.0030 | 0 | 0 | 0 | 0 | 0 |
| 3 | 3 | 0.142 | 0.085 | 0.622 | 0.008 | 0.0015 | 0.042 | 0.0033 | 0 | 0 | 0 | 0 | 0 |
| 4 | 4 | 0.214 | 0.082 | 0.627 | 0.012 | 0.0004 | 0.041 | 0.0030 | 0 | 0 | 0 | 0 | 0 |
| 5 | 5 | 0.049 | 0.077 | 0.627 | 0.012 | 0.0007 | 0.040 | 0.0029 | 0 | 0 | 0 | 0 | 0 |
| 6 | 6 | 0.104 | 0.077 | 0.627 | 0.007 | 0.0017 | 0.043 | 0.0029 | 0 | 0 | 0 | 0 | 0 |
| 7 | 7 | 0.135 | 0.082 | 0.602 | 0.011 | 0.0009 | 0.042 | 0.0034 | 0 | 0 | 0 | 0 | 0 |
| 8 | 8 | 0.160 | 0.082 | 0.589 | 0.012 | 0.0005 | 0.042 | 0.0032 | 0 | 0 | 0 | 0 | 0 |
| 9 | 9 | 0.354 | 0.072 | 0.640 | 0.007 | 0.0006 | 0.043 | 0.0031 | 0 | 0 | 0 | 0 | 0 |
| 10 | 10 | 0.127 | 0.226 | 0.678 | 0.012 | 0.0016 | 0.040 | 0.0029 | 0 | 0 | 0 | 0 | 0 |
| 11 | 11 | 0.143 | 0.086 | 0.056 | 0.007 | 0.0017 | 0.041 | 0.0032 | 0 | 0 | 0 | 0 | 0 |
| 12 | 12 | 0.143 | 0.086 | 0.360 | 0.007 | 0.0016 | 0.041 | 0.0032 | 0 | 0 | 0 | 0 | 0 |
| 13 | 13 | 0.149 | 0.085 | 0.666 | 0.009 | 0.0012 | 0.041 | 0.0033 | 0.03 | 0 | 0 | 0 | 0 |
| 14 | 14 | 0.149 | 0.074 | 0.640 | 0.008 | 0.0005 | 0.040 | 0.0030 | 0 | 0.049 | 0 | 0 | 0 |
| 15 | 15 | 0.139 | 0.082 | 0.627 | 0.008 | 0.0018 | 0.043 | 0.0029 | 0 | 0 | 0.018 | 0 | 0 |
| 16 | 16 | 0.146 | 0.086 | 0.589 | 0.009 | 0.0018 | 0.040 | 0.0033 | 0 | 0 | 0 | 0.03 | 0 |
| 17 | 17 | 0.128 | 0.086 | 0.627 | 0.012 | 0.0004 | 0.042 | 0.0032 | 0 | 0 | 0 | 0 | 0.0018 |
| 18 | 1 | 0.092 | 0.180 | 1.178 | 0.008 | 0.0015 | 0.041 | 0.0030 | 0 | 0 | 0 | 0 | 0 |
| 19 | 1 | 0.086 | 0.178 | 0.608 | 0.008 | 0.0004 | 0.043 | 0.0029 | 0 | 0 | 0 | 0 | 0 |
| 20 | 1 | 0.107 | 0.098 | 1.104 | 0.008 | 0.0011 | 0.043 | 0.0029 | 0 | 0 | 0 | 0 | 0 |

In the table, fields in which chemical constituent is "0" indicate corresponding constituent is not intentionally added.

[Table 2-2]

Table 2-2

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 21 | 2 | 0.246 | 0.066 | 0.653 | 0.007 | 0.0008 | 0.042 | 0.0033 | 0 | 0 | 0 | 0 | 0 |
| 22 | 2 | 0.244 | 0.085 | 1.101 | 0.008 | 0.0015 | 0.039 | 0.0032 | 0 | 0 | 0 | 0 | 0 |
| 23 | 2 | 0.244 | 0.144 | 0.576 | 0.009 | 0.0005 | 0.043 | 0.0029 | 0 | 0 | 0 | 0 | 0 |
| 24 | 3 | 0.243 | 0.070 | 0.597 | 0.009 | 0.0005 | 0.042 | 0.0033 | 0 | 0 | 0 | 0 | 0 |
| 25 | 3 | 0.158 | 0.152 | 0.622 | 0.012 | 0.0016 | 0.040 | 0.0029 | 0 | 0 | 0 | 0 | 0 |
| 26 | 3 | 0.139 | 0.075 | 1.118 | 0.009 | 0.0009 | 0.043 | 0.0030 | 0 | 0 | 0 | 0 | 0 |
| 27 | 4 | 0.389 | 0.086 | 0.678 | 0.011 | 0.0010 | 0.042 | 0.0033 | 0 | 0 | 0 | 0 | 0 |
| 28 | 4 | 0.231 | 0.149 | 0.563 | 0.012 | 0.0006 | 0.040 | 0.0031 | 0 | 0 | 0 | 0 | 0 |
| 29 | 4 | 0.231 | 0.070 | 1.165 | 0.008 | 0.0007 | 0.040 | 0.0029 | 0 | 0 | 0 | 0 | 0 |
| 30 | 2 | 0.140 | 0.086 | 0.576 | 0.009 | 0.0009 | 0.040 | 0.0033 | 0 | 0 | 0 | 0 | 0 |
| 31 | 2 | 0.140 | 0.086 | 0.576 | 0.010 | 0.0014 | 0.040 | 0.0032 | 0 | 0 | 0 | 0 | 0 |
| 32 | 2 | 0.140 | 0.086 | 0.576 | 0.007 | 0.0003 | 0.042 | 0.0029 | 0 | 0 | 0 | 0 | 0 |
| 33 | 2 | 0.140 | 0.086 | 0.576 | 0.008 | 0.0016 | 0.042 | 0.0034 | 0 | 0 | 0 | 0 | 0 |
| 34 | 18 | 0.329 | 0.086 | 0.576 | 0.009 | 0.0012 | 0.041 | 0.0034 | 0 | 0 | 0 | 0 | 0 |
| 35 | 18 | 0.321 | 0.086 | 0.576 | 0.010 | 0.0018 | 0.043 | 0.0034 | 0 | 0 | 0 | 0 | 0 |
| 36 | 2 | 0.138 | 0.086 | 0.576 | 0.009 | 0.0015 | 0.041 | 0.0033 | 0 | 0 | 0 | 0 | 0 |
| 37 | 2 | 0.140 | 0.086 | 0.576 | 0.008 | 0.0011 | 0.041 | 0.0034 | 0 | 0 | 0 | 0 | 0 |
| 38 | 2 | 0.140 | 0.086 | 0.576 | 0.009 | 0.0009 | 0.040 | 0.0033 | 0 | 0 | 0 | 0 | 0 |
| 39 | 2 | 0.140 | 0.086 | 0.576 | 0.010 | 0.0014 | 0.040 | 0.0032 | 0 | 0 | 0 | 0 | 0 |
| 40 | 2 | 0.140 | 0.086 | 0.576 | 0.007 | 0.0003 | 0.042 | 0.0029 | 0 | 0 | 0 | 0 | 0 |

In the table, fields in which chemical constituent is "0" indicate corresponding constituent is not intentionally added.

[Table 3-1]

Table 3-1

| Man. no. | Hot rolling | | | | | | | Cold rolling | Heat treatment step at hot stamping | | | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 1 | 1236 | 102 | 1169 | 38 | 3 | 878 | 704 | 55 | 34 | 841 | 73 | 57 | None | None | 1.3 |
| 2 | 1193 | 99 | 1154 | 35 | 3 | 838 | 706 | 54 | 36 | 841 | 108 | 96 | None | None | 1.3 |
| 3 | 1256 | 95 | 1133 | 28 | 3 | 894 | 661 | 49 | 46 | 887 | 78 | 63 | None | None | 1.4 |
| 4 | 1187 | 99 | 1160 | 34 | 3 | 917 | 653 | 47 | 54 | 920 | 95 | 81 | None | None | 1.5 |
| 5 | 1118 | 129 | 1140 | 32 | 3 | 878 | 574 | 53 | 53 | 845 | 89 | 77 | None | None | 1.3 |
| 6 | 1235 | 129 | 1153 | 34 | 3 | 882 | 682 | 60 | 68 | 887 | 74 | 57 | None | None | 1.1 |
| 7 | 1199 | 85 | 1190 | 38 | 3 | 880 | 684 | 51 | 66 | 823 | 91 | 79 | None | None | 1.4 |
| 8 | 1228 | 119 | 1134 | 44 | 3 | 890 | 715 | 43 | 53 | 832 | 75 | 56 | None | None | 1.6 |
| 9 | 1114 | 109 | 1102 | 29 | 3 | 896 | 714 | 57 | 31 | 878 | 75 | 65 | None | None | 1.2 |
| 10 | 1115 | 112 | 1109 | 34 | 3 | 842 | 567 | 45 | 46 | 836 | 76 | 57 | None | None | 1.5 |
| 11 | 1175 | 116 | 1135 | 33 | 3 | 881 | 710 | 57 | 55 | 904 | 94 | 79 | None | None | 1.2 |
| 12 | 1247 | 88 | 1189 | 39 | 3 | 844 | 545 | 54 | 57 | 873 | 87 | 69 | None | None | 1.3 |
| 13 | 1135 | 92 | 1117 | 30 | 3 | 868 | 652 | 45 | 27 | 894 | 89 | 79 | None | None | 1.5 |
| 14 | 1122 | 95 | 1118 | 40 | 3 | 915 | 619 | 54 | 40 | 828 | 80 | 60 | None | None | 1.3 |
| 15 | 1179 | 78 | 1166 | 36 | 3 | 847 | 692 | 44 | 22 | 872 | 80 | 66 | None | None | 1.6 |
| 16 | 1239 | 126 | 1139 | 36 | 3 | 845 | 692 | 45 | 34 | 890 | 99 | 85 | None | None | 1.5 |
| 17 | 1156 | 112 | 1125 | 44 | 3 | 843 | 721 | 40 | 64 | 871 | 106 | 95 | None | None | 1.7 |
| 18 | 1257 | 122 | 1150 | 39 | 3 | 837 | 660 | 41 | 48 | 924 | 93 | 75 | None | None | 1.7 |

| Man. no. | Hot rolling | | | | | | | Cold rolling | Heat treatment step at hot stamping | | | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 19 | 1108 | 99 | 1105 | 39 | 3 | 862 | 556 | 57 | 25 | 903 | 80 | 70 | None | None | 1.2 |
| 20 | 1187 | 109 | 1123 | 41 | 3 | 910 | 666 | 42 | 21 | 847 | 91 | 71 | None | None | 1.6 |

[Table 3-2]

Table 3-2

| Man. no. | Hot rolling | | | | | | | Cold rolling | Heat treatment step at hot stamping | | | | | | Thickness after hot stamping (mm) |
| --- | --- | --- | --- | --- | --- | --- | --- | --- | --- | --- | --- | --- | --- | --- | --- |
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 21 | 1269 | 71 | 1163 | 45 | 3 | 834 | 687 | 57 | 23 | 826 | 94 | 77 | None | None | 1.2 |
| 22 | 1155 | 102 | 1135 | 34 | 3 | 851 | 645 | 48 | 24 | 901 | 91 | 79 | None | None | 1.5 |
| 23 | 1130 | 92 | 1120 | 40 | 3 | 894 | 582 | 52 | 65 | 923 | 100 | 88 | None | None | 1.3 |
| 24 | 1118 | 105 | 1107 | 38 | 3 | 916 | 633 | 48 | 69 | 889 | 85 | 66 | None | None | 1.5 |
| 25 | 1230 | 102 | 1150 | 40 | 3 | 900 | 647 | 51 | 58 | 929 | 103 | 92 | None | None | 1.4 |
| 26 | 1163 | 122 | 1138 | 25 | 3 | 898 | 712 | 43 | 23 | 885 | 89 | 77 | None | None | 1.6 |
| 27 | 1117 | 119 | 1109 | 31 | 3 | 845 | 697 | 41 | 68 | 891 | 90 | 75 | None | None | 1.7 |
| 28 | 1189 | 85 | 1180 | 25 | 3 | 841 | 635 | 51 | 31 | 892 | 104 | 88 | None | None | 1.4 |
| 29 | 1228 | 102 | 1142 | 37 | 3 | 888 | 703 | 59 | 37 | 859 | 92 | 80 | None | None | 1.1 |
| 30 | **982** | 119 | **955** | 38 | 3 | 903 | 665 | 43 | 45 | 895 | 93 | 80 | None | None | 1.6 |
| 31 | **1390** | 88 | 1139 | 41 | 3 | 842 | 644 | 55 | 70 | 901 | 70 | 52 | None | None | 1.3 |
| 32 | 1113 | **17** | 1109 | 39 | 3 | 862 | 616 | 46 | 66 | 900 | 78 | 61 | None | None | 1.5 |
| 33 | 1151 | 95 | 1137 | 27 | 3 | 881 | 671 | 0 | 66 | 908 | 73 | 59 | None | None | 2.8 |
| 34 | 1131 | 126 | 1128 | 32 | 3 | 841 | 554 | 57 | 51 | 921 | 82 | 68 | 250 | None | 1.2 |
| 35 | 1154 | 78 | 1144 | 42 | 3 | 874 | 546 | 45 | 57 | 920 | 90 | 74 | 257 | Yes | 1.5 |
| 36 | 1150 | 85 | 1134 | 35 | 3 | 852 | 557 | 45 | 50 | 842 | 94 | 76 | None | Yes | 1.5 |
| 37 | 1121 | 105 | 1112 | 40 | 3 | 835 | 699 | 53 | 28 | 839 | 88 | 75 | None | None | 1.3 |
| 38 | 1135 | 126 | **1004** | 45 | 3 | 896 | 545 | 45 | 28 | 826 | 95 | 78 | None | None | 1.7 |

EP 3 584 341 A1

(continued)

| Man. no. | Hot rolling | | | | | | | Cold rolling | Heat treatment step at hot stamping | | | | | | |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | Thickness after hot stamping (mm) |
| 39 | 1108 | 71 | 1102 | 3 | 2 | 845 | 556 | 42 | 67 | 891 | 79 | 68 | None | None | 1.5 |
| 40 | 1189 | 92 | 1155 | 35 | <u>1</u> | 851 | 665 | 51 | 31 | 895 | 107 | 94 | None | None | 1.7 |

[Table 4-1]

Table 4-1

| Man. no. | Microstructure | | | Mechanical properties | | | Remarks |
|---|---|---|---|---|---|---|---|
| | Hardness of middle part in sheet thickness (Hv) | $\Delta H_1$ (Hv) | $\Delta H_2$ (Hv) | Tensile strength (MPa) | Max. bending angle (°) | Hydrogen embrittlement resistance | |
| 1 | 514 | 187 | 48 | 1697 | 106.7 | Good | Inv.ex. |
| 2 | 644 | 171 | 32 | 2124 | 103.4 | Good | Inv.ex. |
| 3 | 716 | 166 | 47 | 2362 | 101.3 | Good | Inv.ex. |
| 4 | 786 | 128 | 34 | 2594 | 99.6 | Good | Inv.ex. |
| 5 | **385** | 197 | 42 | **1150** | 109.8 | Good | **Comp.ex**. |
| 6 | 572 | 188 | 49 | 1887 | 104.8 | Good | Inv.ex. |
| 7 | 615 | 114 | 15 | 2029 | 104.4 | Good | Inv.ex. |
| 8 | 672 | 187 | 46 | 2219 | 102.2 | Good | Inv.ex. |
| 9 | **897** | 188 | 41 | 2960 | **61.7** | Good | **Comp.ex**. |
| 10 | 644 | 177 | 43 | 2124 | 103.0 | Good | Inv.ex. |
| 11 | **471** | 174 | 45 | **1443** | 103.3 | Good | **Comp.ex**. |
| 12 | 652 | 113 | 27 | 2151 | 103.5 | Good | Inv.ex. |
| 13 | 640 | 136 | 35 | 2111 | 103.4 | Good | Inv.ex. |
| 14 | 648 | 141 | 23 | 2137 | 103.6 | Good | Inv.ex. |
| 15 | 643 | 144 | 27 | 2121 | 103.5 | Good | Inv.ex. |
| 16 | 649 | 187 | 46 | 2141 | 102.9 | Good | Inv.ex. |
| 17 | 643 | 177 | 49 | 2121 | 103.0 | Good | Inv.ex. |
| 18 | 517 | 181 | 46 | 1707 | 108.1 | Good | Inv.ex. |
| 19 | 518 | 185 | 47 | 1710 | 107.9 | Good | Inv.ex. |
| 20 | 512 | 187 | 43 | 1690 | 105.4 | Good | Inv.ex. |

[Table 4-2]

Table 4-2

| Man. no. | Microstructure | | | Mechanical properties | | | Remarks |
|---|---|---|---|---|---|---|---|
| | Hardness of middle part in sheet thickness (Hv) | $\Delta H_1$ (Hv) | $\Delta H_2$ (Hv) | Tensile strength (MPa) | Max. tending angle (°) | Hydrogen embrittlement resistance | |
| 21 | 641 | 168 | 31 | 2114 | 101.9 | Good | Inv.ex. |
| 22 | 640 | 165 | 32 | 2111 | 102.8 | Good | Inv.ex. |
| 23 | 643 | 172 | 29 | 2121 | 100.4 | Good | Inv.ex. |
| 24 | 720 | 158 | 45 | 2375 | 97.1 | Good | Inv.ex. |
| 25 | 720 | 161 | 44 | 2375 | 98.5 | Good | Inv.ex. |

(continued)

| Man. no. | Microstructure | | | Mechanical properties | | | Remarks |
|---|---|---|---|---|---|---|---|
| | Hardness of middle part in sheet thickness (Hv) | $\Delta H_1$ (Hv) | $\Delta H_2$ (Hv) | Tensile strength (MPa) | Max. tending angle (°) | Hydrogen embrittlement resistance | |
| 26 | 718 | 160 | 47 | 2368 | 99.4 | Good | Inv.ex. |
| 27 | 782 | 154 | 32 | 2830 | 96.8 | Good | Inv.ex. |
| 28 | 791 | 121 | 34 | 2840 | 97.4 | Good | Inv.ex. |
| 29 | 788 | 137 | 31 | 2840 | 99.9 | Good | Inv.ex. |
| 30 | 642 | **212** | **4** | 2118 | **69.1** | **Poor** | **Comp.ex**. |
| 31 | 637 | **7** | **259** | 2101 | **62.8** | Good | **Comp.ex**. |
| 32 | 642 | **245** | **3** | 2118 | **66.1** | **Poor** | **Comp.ex**. |
| 33 | 640 | 168 | 43 | 2111 | 103.3 | Good | Inv.ex. |
| 34 | 643 | 145 | 31 | 2156 | 101.4 | Good | Inv.ex. |
| 35 | 652 | 158 | 26 | 2144 | 101.5 | Good | Inv.ex. |
| 36 | 651 | 171 | 32 | 2147 | 107.7 | Good | Inv.ex. |
| 37 | 635 | 178 | 31 | 2096 | 99.8 | Good | Inv.ex. |
| 38 | 644 | **209** | **5** | 2114 | **60.1** | **Poor** | **Comp.ex**. |
| 39 | 642 | **214** | **7** | 2121 | **62.6** | **Poor** | **Comp.ex**. |
| 40 | 652 | **210** | **8** | 2147 | **62.0** | **Poor** | **Comp.ex**. |

A case where the tensile strength is 1500 MPa or more, the maximum bending angle (°) is 90 (°) or more, and the hydrogen embrittlement resistance is of the passing level was evaluated as a hot stamped body excellent in impact resistance and hydrogen embrittlement resistance (invention examples in Table 4). On the other hand, a case where even one of the above three performances failed to be satisfied was designated as a comparative example.

[Example B (Mn: 1.50% or more and less than 3.00%)]

A matrix steel sheet having the chemical constituents shown in Table 5 was ground on its surface to remove surface oxides, then a surface layer steel sheet having the chemical constituents shown in Table 6 was welded with both surfaces or one surface by arc welding. The total thickness of the surface layer steel sheet and the matrix steel sheet after arc welding is 200 mm to 300 mm and the thickness of the surface layer steel sheet is 1/3 or so the thickness of the matrix steel sheet (in the case of a single side, 1/4 or so). Manufacturing Nos. 101 to 136 and 138 to 140 are steels with surface layer steel sheets welded to both surfaces, Manufacturing No. 137 is steel with a surface layer steel sheet welded to only one surface. These multilayer steel sheets are hot rolled and/or cold rolled as shown in Table 7. The obtained steel sheets are heat treated as shown in Table 7 and hot stamped to produce stamped bodies. Table 8 shows the microstructures and mechanical characteristics of the hot stamped steel sheets (hot stamped bodies). The chemical constituents analyzed at sheet thickness 1/2 positions of samples taken from the hot stamped steel sheets and at positions of 20 $\mu$m from the surfaces (positions within surface layers) are equivalent to the chemical constituents of the matrix steel sheets and surface layer steel sheets shown in Tables 5 and 6.

[Table 5-1]

Table 5-1

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 101 | 0.21 | 0.18 | 1.74 | 0.014 | 0.0029 | 0.045 | 0.0036 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 103 | 0.33 | 0.12 | 1.80 | 0.009 | 0.0013 | 0.042 | 0.0035 | 0 | 0 | 0 | 0 | 0 |
| 104 | 0.43 | 0.15 | 1.73 | 0.013 | 0.0018 | 0.045 | 0.0035 | 0 | 0 | 0 | 0 | 0 |
| 105 | **0.10** | 0.16 | 1.70 | 0.010 | 0.0013 | 0.042 | 0.0034 | 0 | 0 | 0 | 0 | 0 |
| 106 | 0.32 | 0.12 | 1.84 | 0.007 | 0.0013 | 0.039 | 0.0035 | 0 | 0 | 0 | 0 | 0 |
| 107 | 0.32 | 0.19 | 1.77 | 0.005 | 0.0033 | 0.046 | 0.0031 | 0 | 0 | 0 | 0 | 0 |
| 108 | 0.37 | 0.16 | 1.88 | 0.003 | 0.0003 | 0.043 | 0.0027 | 0 | 0 | 0 | 0 | 0 |
| 109 | **0.78** | 0.12 | 1.85 | 0.005 | 0.0023 | 0.043 | 0.0036 | 0 | 0 | 0 | 0 | 0 |
| 110 | 0.28 | 0.39 | 1.81 | 0.008 | 0.0013 | 0.046 | 0.0029 | 0 | 0 | 0 | 0 | 0 |
| 111 | 0.34 | 0.12 | **0.11** | 0.008 | 0.0023 | 0.039 | 0.0028 | 0 | 0 | 0 | 0 | 0 |
| 112 | 0.36 | 0.12 | **0.80** | 0.008 | 0.0013 | 0.047 | 0.0034 | 0 | 0 | 0 | 0 | 0 |
| 113 | 0.37 | 0.16 | 1.71 | 0.008 | 0.0023 | 0.046 | 0.0031 | 1.70 | 0 | 0 | 0 | 0 |
| 114 | 0.32 | 0.17 | 1.69 | 0.013 | 0.0033 | 0.044 | 0.0028 | 0 | 0.082 | 0 | 0 | 0 |
| 115 | 0.38 | 0.13 | 1.81 | 0.009 | 0.0033 | 0.043 | 0.0032 | 0 | 0 | 0.078 | 0 | 0 |
| 116 | 0.28 | 0.18 | 1.84 | 0.012 | 0.0013 | 0.045 | 0.0036 | 0 | 0 | 0 | 0.06 | 0 |
| 117 | 0.28 | 0.12 | 1.80 | 0.011 | 0.0013 | 0.045 | 0.0033 | 0 | 0 | 0 | 0 | 0.0025 |
| 101 | 0.21 | 0.18 | 1.74 | 0.014 | 0.0029 | 0.045 | 0.0036 | 0 | 0 | 0 | 0 | 0 |
| 101 | 0.21 | 0.18 | 1.74 | 0.014 | 0.0029 | 0.045 | 0.0036 | 0 | 0 | 0 | 0 | 0 |
| 101 | 0.21 | 0.18 | 1.74 | 0.014 | 0.0029 | 0.045 | 0.0036 | 0 | 0 | 0 | 0 | 0 |

In the table, fields in which chemical constituent is "0" indicate corresponding constituent is not intentionally added.

[Table 5-2]

Table 5-2

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 103 | 0.33 | 0.12 | 1.80 | 0.009 | 0.0013 | 0.042 | 0.0035 | 0 | 0 | 0 | 0 | 0 |
| 103 | 0.33 | 0.12 | 1.80 | 0.009 | 0.0013 | 0.042 | 0.0035 | 0 | 0 | 0 | 0 | 0 |
| 103 | 0.33 | 0.12 | 1.80 | 0.009 | 0.0013 | 0.042 | 0.0035 | 0 | 0 | 0 | 0 | 0 |
| 104 | 0.43 | 0.15 | 1.73 | 0.013 | 0.0018 | 0.045 | 0.0035 | 0 | 0 | 0 | 0 | 0 |
| 104 | 0.43 | 0.15 | 1.73 | 0.013 | 0.0018 | 0.045 | 0.0035 | 0 | 0 | 0 | 0 | 0 |
| 104 | 0.43 | 0.15 | 1.73 | 0.013 | 0.0018 | 0.045 | 0.0035 | 0 | 0 | 0 | 0 | 0 |

(continued)

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 118 | 0.68 | 0.19 | 1.80 | 0.012 | 0.0032 | 0.039 | 0.0029 | 0 | 0 | 0 | 0 | 0 |
| 118 | 0.68 | 0.19 | 1.80 | 0.012 | 0.0032 | 0.039 | 0.0029 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |
| 102 | 0.29 | 0.14 | 1.82 | 0.003 | 0.0023 | 0.044 | 0.0032 | 0 | 0 | 0 | 0 | 0 |

In the table, fields in which chemical constituent is "0" indicate corresponding constituent is not intentionally added.

[Table 6-1]

Table 6-1

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 101 | 101 | 0.09 | 0.08 | 0.80 | 0.011 | 0.0014 | 0.043 | 0.0029 | 0 | 0 | 0 | 0 | 0 |
| 102 | 102 | 0.14 | 0.08 | 0.75 | 0.010 | 0.0015 | 0.041 | 0.0030 | 0 | 0 | 0 | 0 | 0 |
| 103 | 103 | 0.15 | 0.06 | 0.86 | 0.010 | 0.0013 | 0.041 | 0.0035 | 0 | 0 | 0 | 0 | 0 |
| 104 | 104 | 0.22 | 0.07 | 0.90 | 0.009 | 0.0005 | 0.042 | 0.0030 | 0 | 0 | 0 | 0 | 0 |
| 105 | 105 | 0.04 | 0.07 | 0.88 | 0.012 | 0.0008 | 0.040 | 0.0031 | 0 | 0 | 0 | 0 | 0 |
| 106 | 106 | 0.14 | 0.06 | 0.88 | 0.004 | 0.0017 | 0.045 | 0.0031 | 0 | 0 | 0 | 0 | 0 |
| 107 | 107 | 0.17 | 0.09 | 0.89 | 0.014 | 0.0007 | 0.042 | 0.0035 | 0 | 0 | 0 | 0 | 0 |
| 108 | 108 | 0.18 | 0.08 | 0.85 | 0.009 | 0.0005 | 0.042 | 0.0033 | 0 | 0 | 0 | 0 | 0 |
| 109 | 109 | 0.34 | 0.05 | 0.93 | 0.009 | 0.0004 | 0.044 | 0.0030 | 0 | 0 | 0 | 0 | 0 |
| 110 | 110 | 0.05 | 0.22 | 0.91 | 0.011 | 0.0018 | 0.041 | 0.0027 | 0 | 0 | 0 | 0 | 0 |
| 111 | 111 | 0.19 | 0.06 | 0.05 | 0.008 | 0.0019 | 0.042 | 0.0033 | 0 | 0 | 0 | 0 | 0 |
| 112 | 112 | 0.17 | 0.06 | 0.36 | 0.006 | 0.0015 | 0.041 | 0.0030 | 0 | 0 | 0 | 0 | 0 |
| 113 | 113 | 0.20 | 0.09 | 0.91 | 0.011 | 0.0010 | 0.039 | 0.0034 | 0.01 | 0 | 0 | 0 | 0 |
| 114 | 114 | 0.16 | 0.07 | 0.81 | 0.010 | 0.0003 | 0.042 | 0.0032 | 0 | 0.038 | 0 | 0 | 0 |
| 115 | 115 | 0.19 | 0.06 | 0.80 | 0.010 | 0.0019 | 0.044 | 0.0030 | 0 | 0 | 0.011 | 0 | 0 |
| 116 | 116 | 0.14 | 0.10 | 0.83 | 0.009 | 0.0020 | 0.042 | 0.0034 | 0 | 0 | 0 | 0.02 | 0 |
| 117 | 117 | 0.14 | 0.06 | 0.79 | 0.013 | 0.0003 | 0.044 | 0.0034 | 0 | 0 | 0 | 0 | 0.0012 |
| 118 | 101 | 0.08 | 0.17 | 1.57 | 0.007 | 0.0016 | 0.041 | 0.0029 | 0 | 0 | 0 | 0 | 0 |
| 119 | 101 | 0.08 | 0.16 | 0.82 | 0.010 | 0.0002 | 0.042 | 0.0029 | 0 | 0 | 0 | 0 | 0 |
| 120 | 101 | 0.10 | 0.09 | 1.60 | 0.008 | 0.0012 | 0.041 | 0.0031 | 0 | 0 | 0 | 0 | 0 |

In the table, fields in which chemical constituent is "0" indicate corresponding constituent is not intentionally added.

[Table 6-2]

Table 6-2

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 121 | 102 | 0.24 | 0.06 | 0.87 | 0.004 | 0.0007 | 0.040 | 0.0033 | 0 | 0 | 0 | 0 | 0 |
| 122 | 102 | 0.24 | 0.07 | 1.58 | 0.009 | 0.0017 | 0.039 | 0.0033 | 0 | 0 | 0 | 0 | 0 |
| 123 | 102 | 0.26 | 0.12 | 0.86 | 0.011 | 0.0003 | 0.045 | 0.0028 | 0 | 0 | 0 | 0 | 0 |
| 124 | 103 | 0.26 | 0.05 | 0.88 | 0.007 | 0.0005 | 0.044 | 0.0031 | 0 | 0 | 0 | 0 | 0 |
| 125 | 103 | 0.17 | 0.12 | 0.86 | 0.015 | 0.0018 | 0.042 | 0.0029 | 0 | 0 | 0 | 0 | 0 |
| 126 | 103 | 0.14 | 0.06 | 1.49 | 0.007 | 0.0007 | 0.042 | 0.0030 | 0 | 0 | 0 | 0 | 0 |
| 127 | 104 | 0.39 | 0.08 | 0.83 | 0.010 | 0.0012 | 0.041 | 0.0033 | 0 | 0 | 0 | 0 | 0 |
| 128 | 104 | 0.22 | 0.14 | 0.81 | 0.015 | 0.0005 | 0.041 | 0.0032 | 0 | 0 | 0 | 0 | 0 |
| 129 | 104 | 0.25 | 0.06 | 1.51 | 0.006 | 0.0007 | 0.038 | 0.0031 | 0 | 0 | 0 | 0 | 0 |
| 130 | 102 | 0.14 | 0.08 | 0.86 | 0.007 | 0.0011 | 0.042 | 0.0034 | 0 | 0 | 0 | 0 | 0 |
| 131 | 102 | 0.14 | 0.07 | 0.80 | 0.012 | 0.0014 | 0.041 | 0.0032 | 0 | 0 | 0 | 0 | 0 |
| 132 | 102 | 0.14 | 0.08 | 0.86 | 0.005 | 0.0001 | 0.040 | 0.0030 | 0 | 0 | 0 | 0 | 0 |
| 133 | 102 | 0.15 | 0.07 | 0.86 | 0.011 | 0.0014 | 0.041 | 0.0034 | 0 | 0 | 0 | 0 | 0 |
| 134 | 102 | 0.15 | 0.07 | 0.86 | 0.012 | 0.0013 | 0.039 | 0.0035 | 0 | 0 | 0 | 0 | 0 |
| 135 | 118 | 0.31 | 0.10 | 0.81 | 0.010 | 0.0018 | 0.044 | 0.0032 | 0 | 0 | 0 | 0 | 0 |
| 136 | 118 | 0.32 | 0.10 | 0.76 | 0.010 | 0.0017 | 0.039 | 0.0031 | 0 | 0 | 0 | 0 | 0 |
| 137 | 102 | 0.13 | 0.08 | 0.76 | 0.005 | 0.0013 | 0.041 | 0.0035 | 0 | 0 | 0 | 0 | 0 |
| 138 | 102 | 0.14 | 0.08 | 0.75 | 0.010 | 0.0015 | 0.041 | 0.0030 | 0 | 0 | 0 | 0 | 0 |
| 139 | 102 | 0.14 | 0.08 | 0.75 | 0.010 | 0.0015 | 0.041 | 0.0030 | 0 | 0 | 0 | 0 | 0 |
| 140 | 102 | 0.14 | 0.08 | 0.75 | 0.010 | 0.0015 | 0.041 | 0.0030 | 0 | 0 | 0 | 0 | 0 |

In the table, fields in which chemical constituent is "0" indicate corresponding constituent is not intentionally added.

[Table 7-1]

EP 3 584 341 A1

Table 7-1

| Man. no. | Hot rolling | | | | | | | Cold rolling | | Heat treatment step at hot stamping | | | | | Thickness stamping (mm) |
|---|---|---|---|---|---|---|---|---|---|---|---|---|---|---|---|
| | Heating temp. (°C) | Holding time (min) | Rough rolling (°C) | Thickness reduction rate % | No. of rolling operations with time be-tween pass-es of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 101 | 1263 | 97 | 1159 | 36 | 3 | 888 | 604 | 53 | 35 | 904 | 72 | 67 | None | None | 1.3 |
| 102 | 1235 | 94 | 1149 | 33 | 3 | 881 | 629 | 47 | 41 | 868 | 103 | 93 | None | None | 1.5 |
| 103 | 1244 | 90 | 1143 | 24 | 3 | 842 | 660 | 53 | 51 | 845 | 72 | 67 | None | None | 1.3 |
| 104 | 1272 | 98 | 1163 | 31 | 3 | 909 | 656 | 53 | 56 | 915 | 95 | 87 | None | None | 1.3 |
| 105 | 1286 | 129 | 1138 | 32 | 3 | 887 | 620 | 44 | 50 | 853 | 84 | 78 | None | None | 1.6 |
| 106 | 1268 | 133 | 1149 | 39 | 3 | 833 | 556 | 52 | 69 | 901 | 83 | 75 | None | None | 1.3 |
| 107 | 1274 | 89 | 1200 | 36 | 3 | 833 | 621 | 50 | 69 | 926 | 97 | 92 | None | None | 1.4 |
| 108 | 1266 | 111 | 1134 | 45 | 3 | 855 | 686 | 46 | 54 | 827 | 85 | 78 | None | None | 1.5 |
| 109 | 1282 | 117 | 1160 | 28 | 3 | 869 | 637 | 44 | 27 | 919 | 81 | 72 | None | None | 1.6 |
| 110 | 1293 | 107 | 1143 | 33 | 3 | 887 | 720 | 54 | 44 | 907 | 85 | 79 | None | None | 1.3 |
| 111 | 1253 | 119 | 1128 | 37 | 3 | 836 | 662 | 46 | 58 | 823 | 93 | 88 | None | None | 1.5 |
| 112 | 1278 | 90 | 1186 | 42 | 3 | 844 | 545 | 49 | 54 | 873 | 94 | 88 | None | None | 1.4 |
| 113 | 1245 | 94 | 1187 | 25 | 3 | 876 | 614 | 45 | 29 | 881 | 81 | 73 | None | None | 1.5 |
| 114 | 1293 | 101 | 1144 | 37 | 3 | 837 | 557 | 57 | 38 | 843 | 72 | 63 | None | None | 1.2 |
| 115 | 1250 | 82 | 1160 | 35 | 3 | 891 | 566 | 49 | 21 | 830 | 87 | 78 | None | None | 1.4 |
| 116 | 1268 | 125 | 1141 | 37 | 3 | 892 | 590 | 50 | 38 | 872 | 93 | 85 | None | None | 1.4 |
| 117 | 1279 | 103 | 1126 | 40 | 3 | 915 | 556 | 48 | 59 | 908 | 99 | 89 | None | None | 1.5 |
| 118 | 1256 | 126 | 1155 | 35 | 3 | 880 | 679 | 46 | 44 | 831 | 87 | 82 | None | None | 1.5 |

(continued)

| Man. no. | Hot rolling | | | | | | | Cold rolling | Heat treatment step at hot stamping | | | | | | Thickness stamping (mm) |
| | Heating temp. (°C) | Holding time (min) | Rough rolling (°C) | Thickness reduction rate % | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
|---|---|---|---|---|---|---|---|---|---|---|---|---|---|---|---|
| 119 | 1242 | 99 | 1162 | 36 | 3 | 865 | 708 | 49 | 21 | 872 | 71 | 61 | None | None | 1.4 |
| 120 | 1276 | 103 | 1124 | 45 | 3 | 892 | 703 | 46 | 26 | 839 | 98 | 91 | None | None | 1.5 |

[Table 7-2]

Table 7-2

| Man. no. | Hot rolling | | | | | | | Cold rolling | | Heat treatment step at hot stamping | | | | | Thickness after hot stamping (mm) |
| --- | --- | --- | --- | --- | --- | --- | --- | --- | --- | --- | --- | --- | --- | --- | --- |
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 121 | 1284 | 71 | 1153 | 48 | 3 | 891 | 684 | 48 | 22 | 870 | 88 | 83 | None | None | 1.5 |
| 122 | 1266 | 104 | 1163 | 34 | 3 | 831 | 632 | 46 | 25 | 856 | 90 | 83 | None | None | 1.5 |
| 123 | 1265 | 85 | 1125 | 38 | 3 | 903 | 734 | 57 | 64 | 900 | 107 | 100 | None | None | 1.2 |
| 124 | 1258 | 95 | 1155 | 36 | 3 | 873 | 641 | 46 | 72 | 900 | 93 | 84 | None | None | 1.5 |
| 125 | 1266 | 97 | 1159 | 45 | 3 | 874 | 641 | 52 | 56 | 870 | 110 | 100 | None | None | 1.3 |
| 126 | 1273 | 125 | 1129 | 29 | 3 | 911 | 546 | 49 | 18 | 891 | 80 | 71 | None | None | 1.4 |
| 127 | 1255 | 121 | 1186 | 32 | 3 | 880 | 697 | 52 | 67 | 865 | 88 | 79 | None | None | 1.3 |
| 128 | 1251 | 76 | 1173 | 23 | 3 | 862 | 698 | 50 | 28 | 889 | 95 | 86 | None | None | 1.4 |
| 129 | 1295 | 109 | 1133 | 32 | 3 | 892 | 706 | 50 | 34 | 846 | 89 | 80 | None | None | 1.4 |
| 130 | **971** | 125 | **951** | 34 | 3 | 855 | 588 | 46 | 48 | 900 | 85 | 80 | None | None | 1.5 |
| 131 | **1364** | 81 | 1131 | 46 | 3 | 870 | 663 | 51 | 68 | 921 | 70 | 61 | None | None | 1.4 |
| 132 | 1284 | **18** | 1150 | 36 | 3 | 862 | 686 | 57 | 62 | 870 | 74 | 64 | None | None | 1.2 |
| 133 | 1281 | 96 | 1140 | 29 | 3 | 835 | 612 | 46 | 61 | 857 | 71 | 62 | None | None | 1.5 |
| 134 | 1280 | 128 | 1129 | 37 | 3 | 857 | 619 | 0 | 48 | 883 | 74 | 66 | None | None | 2.8 |
| 135 | 1290 | 74 | 1142 | 43 | 3 | 853 | 654 | 55 | 60 | 825 | 96 | 86 | 269 | None | 1.3 |
| 136 | 1277 | 83 | 1172 | 39 | 3 | 864 | 576 | 49 | 46 | 915 | 103 | 94 | 251 | Yes | 1.4 |
| 137 | 1281 | 115 | 1128 | 41 | 3 | 847 | 709 | 46 | 31 | 893 | 91 | 81 | None | Yes | 1.5 |
| 138 | 1276 | 119 | **1002** | 42 | 3 | 892 | 590 | 53 | 29 | 870 | 95 | 86 | None | None | 1.4 |

EP 3 584 341 A1

(continued)

| Man. no. | Hot rolling | | | | | | | Cold rolling | | Heat treatment step at hot stamping | | | | | Thickness after hot stamping (mm) |
| --- | --- | --- | --- | --- | --- | --- | --- | --- | --- | --- | --- | --- | --- | --- | --- |
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 139 | 1266 | 82 | 1162 | <u>4</u> | 2 | 873 | 708 | 45 | 68 | 900 | 86 | 76 | None | None | 1.4 |
| 140 | 1251 | 103 | 1168 | 38 | 1 | 880 | 684 | 57 | 28 | 846 | 113 | 104 | None | None | 2.8 |

EP 3 584 341 A1

[Table 8-1]

[Table 8-1]

Table 8-1

| Man. no. | Microstructure | | | Mechanical properties | | | | | | Remarks |
|---|---|---|---|---|---|---|---|---|---|---|
| | Hardness of middle part in sheet thickness (Hv) | $\Delta H_1$ (Hv) | $\Delta H_2$ (Hv) | Tensile strength (MPa) | Average cross-sectional hardness (Hv) | Minimum hardness (Hv) | Average cross-sectional hardness-Minimum hardness (Hv) | Max. bending angle (°) | Hydro gen embrittlement resistance | |
| 101 | 539 | 192 | 45 | 1613 | 539 | 475 | 64 | 99.7 | Good | Inv.ex. |
| 102 | 651 | 173 | 38 | 1948 | 651 | 612 | 39 | 96.4 | Good | Inv.ex. |
| 103 | 715 | 169 | 46 | 2138 | 715 | 651 | 64 | 95.3 | Good | Inv.ex. |
| 104 | 790 | 131 | 28 | 2362 | 790 | 745 | 45 | 91.6 | Good | Inv.ex. |
| 105 | **401** | 196 | 39 | **1199** | 401 | 354 | 47 | 103.2 | Good | **Comp.ex.** |
| 106 | 697 | 190 | 44 | 2083 | 697 | 663 | 34 | 97.8 | Good | Inv.ex. |
| 107 | 695 | 110 | 11 | 2077 | 695 | 631 | 64 | 101.4 | Good | Inv.ex. |
| 108 | 769 | 181 | 41 | 2298 | 769 | 735 | 34 | 101.2 | Good | Inv.ex. |
| 109 | **906** | 184 | 40 | 2990 | 906 | 862 | 44 | **54.2** | Good | **Comp.ex.** |
| 110 | 644 | 178 | 37 | 1926 | 644 | 601 | 43 | 95.0 | Good | Inv.ex. |
| 111 | **462** | 169 | 49 | **1401** | 462 | 304 | **158** | 103.5 | Good | **Comp.ex.** |
| 112 | 715 | 110 | 26 | 2138 | 715 | 579 | **136** | 98.5 | Good | Inv.ex. |
| 113 | 768 | 137 | 32 | 2295 | 768 | 702 | 66 | 102.4 | Good | Inv.ex. |
| 114 | 701 | 142 | 27 | 2095 | 701 | 672 | 29 | 100.6 | Good | Inv.ex. |
| 115 | 781 | 140 | 27 | 2335 | 781 | 737 | 44 | 97.5 | Good | Inv.ex. |
| 116 | 645 | 190 | 33 | 1929 | 645 | 589 | 56 | 94.9 | Good | Inv.ex. |
| 117 | 643 | 173 | 39 | 1923 | 643 | 598 | 45 | 101.6 | Good | Inv.ex. |
| 118 | 543 | 179 | 47 | 1625 | 543 | 478 | 65 | 97.1 | Good | Inv.ex. |
| 119 | 538 | 187 | 45 | 1610 | 538 | 504 | 34 | 97.9 | Good | Inv.ex. |
| 120 | 543 | 185 | 41 | 1625 | 543 | 517 | 26 | 97.7 | Good | Inv.ex. |

[Table 8-2]

[Table 8-2]

Table 8-2

| Man. no. | Microstructure | | | Mechanical properties | | | | | | Remarks |
|---|---|---|---|---|---|---|---|---|---|---|
| | Hardness of middle part in sheet thickness (Hv) | $\Delta H_1$ (Hv) | $\Delta H_2$ (Hv) | Tensile strength (MPa) | Average cross-sectional hardness (Hv) | Minimum hardness (Hv) | Average cross-sectional hardness-Minimum hardness (Hv) | Max. bending angle (°) | Hydrogen embrittlement resistance | |
| 121 | 651 | 164 | 28 | 1948 | 651 | 594 | 57 | 97.7 | Good | Inv.ex. |
| 122 | 655 | 160 | 30 | 1960 | 655 | 581 | 74 | 98.0 | Good | Inv.ex. |
| 123 | 658 | 167 | 32 | 1969 | 658 | 598 | 60 | 96.5 | Good | Inv.ex. |
| 124 | 710 | 154 | 42 | 2123 | 710 | 683 | 27 | 96.6 | Good | Inv.ex. |
| 125 | 707 | 163 | 48 | 2114 | 707 | 676 | 31 | 96.6 | Good | Inv.ex. |
| 126 | 712 | 158 | 43 | 2129 | 712 | 675 | 37 | 97.3 | Good | Inv.ex. |
| 127 | 781 | 155 | 34 | 2335 | 781 | 741 | 40 | 96.9 | Good | Inv.ex. |
| 128 | 788 | 121 | 34 | 2356 | 788 | 751 | 37 | 97.2 | Good | Inv.ex. |
| 129 | 779 | 132 | 27 | 2329 | 779 | 728 | 51 | 98.1 | Good | Inv.ex. |
| 130 | 656 | **210** | **9** | 1963 | 656 | 611 | 45 | **61.1** | **Poor** | **Comp.ex.** |
| 131 | 655 | **5** | **219** | 1960 | 655 | 600 | 55 | **62.8** | Good | **Comp.ex.** |
| 132 | 650 | **221** | **5** | 1945 | 650 | 601 | 49 | **69.1** | **Poor** | **Comp.ex.** |
| 133 | 659 | 117 | 41 | 1972 | 659 | 599 | 60 | 90.2 | Good | Inv.ex. |
| 134 | 657 | 168 | 49 | 1966 | 657 | 581 | 76 | 96.3 | Good | Inv.ex. |
| 135 | 721 | 140 | 31 | 2156 | 721 | 660 | 61 | 92.4 | Good | Inv.ex. |
| 136 | 718 | 157 | 32 | 2147 | 718 | 653 | 65 | 92.5 | Good | Inv.ex. |
| 137 | 659 | 171 | 27 | 1972 | 659 | 584 | 75 | 102.1 | Good | Inv.ex. |
| 138 | 655 | **201** | **6** | 2162 | 655 | 622 | 33 | **59.5** | **Poor** | **Comp.ex.** |
| 139 | 662 | **211** | **7** | 2185 | 662 | 627 | 35 | **63.8** | **Poor** | **Comp.ex.** |
| 140 | 641 | **204** | **4** | 2115 | 641 | 612 | 29 | **60.9** | **Poor** | **Comp.ex.** |

EP 3 584 341 A1

Deformation concentrates in a local soft part at the time of collision and becomes a cause of cracking, so in securing impact resistance, it is important that the variation in hardness in the stamped body be small, i.e., that stable strength be secured. Therefore, in the examples, the impact resistance of the hot stamped body was evaluated from the viewpoint of variation of hardness as well. A cross-section of a long shaped hot stamped body vertical to the long direction was taken at any position in that long direction and measured for hardness of the middle position in sheet thickness in the entire cross-sectional region including the vertical walls. For the measurement, a Vickers tester was used. The measurement load was 1 kgf and the measurement intervals were 1 mm. A case where there were no measurement points of below 100Hv from the average value of all measurement points was evaluated as being small in variation of hardness, i.e., being excellent in strength stability, and as a result being excellent in impact resistance and marked as a passing level (good), while a case where there were measurement points of below 100Hv was marked as a failing level (poor). More specifically, a case where a difference from an average value of hardness of all measurement points (average cross-sectional hardness in Table 8) and the value of the smallest hardness among all measurement points is 100Hv was marked as passing and a case of more than 100Hv was marked as failing.

In the same way as the case of Example A, a case where the tensile strength is 1500 MPa or more, the maximum bending angle (°) is 90 (°) or more, and the hydrogen embrittlement resistance is of the passing level was evaluated as a hot stamped body excellent in impact resistance and hydrogen embrittlement resistance (invention examples in Table 8). Further, a case where the average cross-sectional hardness-minimum hardness is 100Hv or less was evaluated as improved in impact resistance even from the viewpoint of strength stability in addition to bendability (invention examples other than Example 112 in Table 8). On the other hand, a case where even one of the requirements of "tensile strength", "maximum bending angle", and "hydrogen embrittlement resistance" failed to be satisfied was designated as a comparative example.

[Example C (Si: more than 0.50% and less than 3.00%)]

A matrix steel sheet having the chemical constituents shown in Table 9 was ground on its surface to remove surface oxides, then a surface layer steel sheet having the chemical constituents shown in Table 10 was welded with both surfaces or one surface by arc welding. The total thickness of the surface layer steel sheet and the matrix steel sheet after arc welding is 200 mm to 300 mm and the thickness of the surface layer steel sheet is 1/3 or so the thickness of the matrix steel sheet (in the case of a single side, 1/4 or so). Manufacturing Nos. 201 to 236 and 238 to 240 are steels with surface layer steel sheets welded to both surfaces, Manufacturing No. 237 is steel with a surface layer steel sheet welded to only one surface. These multilayer steel sheets are hot rolled and/or cold rolled as shown in Table 11. The obtained steel sheets are heat treated as shown in Table 11 and hot stamped to produce stamped bodies. Table 12 shows the microstructures and mechanical characteristics of the hot stamped steel sheets (hot stamped bodies). The chemical constituents analyzed at sheet thickness 1/2 positions of samples taken from the hot stamped steel sheets and at positions of 20 $\mu$m from the surfaces (positions within surface layers) are equivalent to the chemical constituents of the matrix steel sheets and surface layer steel sheets shown in Tables 9 and 10.

[Table 9-1]

Table 9-1

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 201 | 0.22 | 1.63 | 1.33 | 0.011 | 0.0020 | 0.046 | 0.0027 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 203 | 0.31 | 1.45 | 1.25 | 0.006 | 0.0007 | 0.040 | 0.0040 | 0 | 0 | 0 | 0 | 0 |
| 204 | 0.49 | 1.50 | 1.34 | 0.010 | 0.0005 | 0.057 | 0.0028 | 0 | 0 | 0 | 0 | 0 |
| 205 | **0.07** | 1.48 | 1.23 | 0.008 | 0.0002 | 0.029 | 0.0033 | 0 | 0 | 0 | 0 | 0 |
| 206 | 0.23 | 1.19 | 1.23 | 0.004 | 0.0006 | 0.055 | 0.0035 | 0 | 0 | 0 | 0 | 0 |
| 207 | 0.29 | 1.06 | 1.31 | 0.009 | 0.0004 | 0.037 | 0.0025 | 0 | 0 | 0 | 0 | 0 |
| 208 | 0.31 | 1.44 | 1.20 | 0.003 | 0.0003 | 0.053 | 0.0027 | 0 | 0 | 0 | 0 | 0 |
| 209 | **0.79** | 1.11 | 1.31 | 0.005 | 0.0003 | 0.040 | 0.0028 | 0 | 0 | 0 | 0 | 0 |

(continued)

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 210 | 0.34 | **0.21** | 1.25 | 0.007 | 0.0004 | 0.041 | 0.0031 | 0 | 0 | 0 | 0 | 0 |
| 211 | 0.29 | **0.44** | 0.84 | 0.007 | 0.0006 | 0.057 | 0.0033 | 0 | 0 | 0 | 0 | 0 |
| 212 | 0.27 | 1.27 | **0.09** | 0.009 | 0.0002 | 0.057 | 0.0028 | 0 | 0 | 0 | 0 | 0 |
| 213 | 0.29 | 1.41 | 1.31 | 0.006 | 0.0007 | 0.057 | 0.0034 | 1.14 | 0 | 0 | 0 | 0 |
| 214 | 0.23 | 1.47 | 1.21 | 0.004 | 0.0007 | 0.035 | 0.0026 | 0 | 0.032 | 0 | 0 | 0 |
| 215 | 0.33 | 1.67 | 1.22 | 0.006 | 0.0003 | 0.062 | 0.0033 | 0 | 0 | 0.078 | 0 | 0 |
| 216 | 0.27 | 1.48 | 1.34 | 0.007 | 0.0006 | 0.042 | 0.0033 | 0 | 0 | 0 | 0.04 | 0 |
| 217 | 0.33 | 1.26 | 1.28 | 0.011 | 0.0007 | 0.055 | 0.0026 | 0 | 0 | 0 | 0 | 0.0023 |
| 201 | 0.22 | 1.63 | 1.33 | 0.011 | 0.0020 | 0.046 | 0.0027 | 0 | 0 | 0 | 0 | 0 |
| 201 | 0.22 | 1.63 | 1.33 | 0.011 | 0.0020 | 0.046 | 0.0027 | 0 | 0 | 0 | 0 | 0 |
| 201 | 0.22 | 1.63 | 1.33 | 0.011 | 0.0020 | 0.046 | 0.0027 | 0 | 0 | 0 | 0 | 0 |

In the table, fields in which chemical constituent is "0" indicate corresponding constituent is not intentionally added.

[Table 9-2]

Table 9-2

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 203 | 0.31 | 1.45 | 1.25 | 0.006 | 0.0007 | 0.040 | 0.0040 | 0 | 0 | 0 | 0 | 0 |
| 203 | 0.31 | 1.45 | 1.25 | 0.006 | 0.0007 | 0.040 | 0.0040 | 0 | 0 | 0 | 0 | 0 |
| 203 | 0.31 | 1.45 | 1.25 | 0.006 | 0.0007 | 0.040 | 0.0040 | 0 | 0 | 0 | 0 | 0 |
| 204 | 0.49 | 1.50 | 1.34 | 0.010 | 0.0005 | 0.057 | 0.0028 | 0 | 0 | 0 | 0 | 0 |
| 204 | 0.49 | 1.50 | 1.34 | 0.010 | 0.0005 | 0.057 | 0.0028 | 0 | 0 | 0 | 0 | 0 |
| 204 | 0.49 | 1.50 | 1.34 | 0.010 | 0.0005 | 0.057 | 0.0028 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 218 | 0.69 | 1.21 | 1.34 | 0.011 | 0.0005 | 0.057 | 0.0027 | 0 | 0 | 0 | 0 | 0 |
| 218 | 0.69 | 1.21 | 1.34 | 0.011 | 0.0005 | 0.057 | 0.0027 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |

(continued)

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 202 | 0.24 | 1.56 | 1.23 | 0.010 | 0.0005 | 0.054 | 0.0029 | 0 | 0 | 0 | 0 | 0 |
| 202 | 0.24 | 1.56 | 1.23 | 0.010 | 0.0005 | 0.054 | 0.0029 | 0 | 0 | 0 | 0 | 0 |

In the table, fields in which chemical constituent is "0" indicate corresponding constituent is not intentionally added.

[Table 10-1]

Table 10-1

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 201 | 201 | 0.13 | 0.86 | 0.67 | 0.015 | 0.0017 | 0.046 | 0.0028 | 0 | 0 | 0 | 0 | 0 |
| 202 | 202 | 0.12 | 0.83 | 0.65 | 0.012 | 0.0016 | 0.036 | 0.0033 | 0 | 0 | 0 | 0 | 0 |
| 203 | 203 | 0.15 | 0.80 | 0.60 | 0.015 | 0.0018 | 0.041 | 0.0037 | 0 | 0 | 0 | 0 | 0 |
| 204 | 204 | 0.28 | 0.78 | 0.75 | 0.011 | 0.0006 | 0.040 | 0.0033 | 0 | 0 | 0 | 0 | 0 |
| 205 | 205 | 0.03 | 0.86 | 0.63 | 0.011 | 0.0010 | 0.039 | 0.0032 | 0 | 0 | 0 | 0 | 0 |
| 206 | 206 | 0.10 | 0.58 | 0.64 | 0.006 | 0.0021 | 0.039 | 0.0028 | 0 | 0 | 0 | 0 | 0 |
| 207 | 207 | 0.12 | 0.61 | 0.63 | 0.017 | 0.0007 | 0.038 | 0.0032 | 0 | 0 | 0 | 0 | 0 |
| 208 | 208 | 0.15 | 0.72 | 0.65 | 0.011 | 0.0005 | 0.041 | 0.0035 | 0 | 0 | 0 | 0 | 0 |
| 209 | 209 | 0.40 | 0.60 | 0.69 | 0.014 | 0.0009 | 0.039 | 0.0027 | 0 | 0 | 0 | 0 | 0 |
| 210 | 210 | 0.16 | 0.12 | 0.68 | 0.016 | 0.0018 | 0.039 | 0.0025 | 0 | 0 | 0 | 0 | 0 |
| 211 | 211 | 0.13 | 0.24 | 0.42 | 0.012 | 0.0024 | 0.040 | 0.0031 | 0 | 0 | 0 | 0 | 0 |
| 212 | 212 | 0.12 | 0.65 | 0.04 | 0.011 | 0.0017 | 0.043 | 0.0026 | 0 | 0 | 0 | 0 | 0 |
| 213 | 213 | 0.15 | 0.78 | 0.72 | 0.015 | 0.0012 | 0.035 | 0.0031 | 0.05 | 0 | 0 | 0 | 0 |
| 214 | 214 | 0.12 | 0.76 | 0.59 | 0.009 | 0.0002 | 0.042 | 0.0033 | 0 | 0.028 | 0 | 0 | 0 |
| 215 | 215 | 0.19 | 0.97 | 0.67 | 0.014 | 0.0019 | 0.045 | 0.0029 | 0 | 0 | 0.018 | 0 | 0 |
| 216 | 216 | 0.15 | 0.78 | 0.72 | 0.010 | 0.0019 | 0.037 | 0.0036 | 0 | 0 | 0 | 0.03 | 0 |
| 217 | 217 | 0.14 | 0.67 | 0.60 | 0.018 | 0.0007 | 0.046 | 0.0032 | 0 | 0 | 0 | 0 | 0.0018 |
| 218 | 201 | 0.07 | 1.40 | 1.09 | 0.007 | 0.0018 | 0.042 | 0.0026 | 0 | 0 | 0 | 0 | 0 |
| 219 | 201 | 0.10 | 1.60 | 0.70 | 0.009 | 0.0005 | 0.039 | 0.0026 | 0 | 0 | 0 | 0 | 0 |
| 220 | 201 | 0.12 | 0.67 | 1.24 | 0.010 | 0.0017 | 0.044 | 0.0034 | 0 | 0 | 0 | 0 | 0 |

In the table, fields in which chemical constituent is "0" indicate corresponding constituent is not intentionally added.

[Table 10-2]

Table 10-2

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 221 | 202 | 0.19 | 0.73 | 0.57 | 0.005 | 0.0007 | 0.036 | 0.0031 | 0 | 0 | 0 | 0 | 0 |
| 222 | 202 | 0.21 | 0.76 | 1.02 | 0.010 | 0.0016 | 0.033 | 0.0029 | 0 | 0 | 0 | 0 | 0 |
| 223 | 202 | 0.21 | 1.47 | 0.47 | 0.010 | 0.0007 | 0.042 | 0.0032 | 0 | 0 | 0 | 0 | 0 |
| 224 | 203 | 0.21 | 0.55 | 0.71 | 0.010 | 0.0007 | 0.044 | 0.0030 | 0 | 0 | 0 | 0 | 0 |
| 225 | 203 | 0.17 | 1.42 | 0.61 | 0.017 | 0.0022 | 0.042 | 0.0027 | 0 | 0 | 0 | 0 | 0 |
| 226 | 203 | 0.14 | 0.73 | 1.04 | 0.006 | 0.0010 | 0.041 | 0.0027 | 0 | 0 | 0 | 0 | 0 |
| 227 | 204 | 0.42 | 0.72 | 0.66 | 0.012 | 0.0017 | 0.034 | 0.0034 | 0 | 0 | 0 | 0 | 0 |
| 228 | 204 | 0.21 | 1.22 | 0.63 | 0.019 | 0.0010 | 0.034 | 0.0031 | 0 | 0 | 0 | 0 | 0 |
| 229 | 204 | 0.32 | 0.77 | 1.29 | 0.009 | 0.0006 | 0.039 | 0.0028 | 0 | 0 | 0 | 0 | 0 |
| 230 | 202 | 0.10 | 0.76 | 0.59 | 0.012 | 0.0015 | 0.041 | 0.0032 | 0 | 0 | 0 | 0 | 0 |
| 231 | 202 | 0.11 | 0.87 | 0.70 | 0.012 | 0.0018 | 0.040 | 0.0034 | 0 | 0 | 0 | 0 | 0 |
| 232 | 202 | 0.11 | 0.84 | 0.70 | 0.010 | 0.0006 | 0.039 | 0.0028 | 0 | 0 | 0 | 0 | 0 |
| 233 | 202 | 0.10 | 0.80 | 0.65 | 0.014 | 0.0014 | 0.043 | 0.0036 | 0 | 0 | 0 | 0 | 0 |
| 234 | 202 | 0.10 | 0.87 | 0.63 | 0.014 | 0.0012 | 0.035 | 0.0033 | 0 | 0 | 0 | 0 | 0 |
| 235 | 218 | 0.28 | 0.64 | 0.74 | 0.013 | 0.0020 | 0.038 | 0.0031 | 0 | 0 | 0 | 0 | 0 |
| 236 | 218 | 0.32 | 0.65 | 0.70 | 0.009 | 0.0022 | 0.038 | 0.0029 | 0 | 0 | 0 | 0 | 0 |
| 237 | 202 | 0.12 | 0.87 | 0.69 | 0.009 | 0.0015 | 0.036 | 0.0036 | 0 | 0 | 0 | 0 | 0 |
| 238 | 202 | 0.12 | 0.83 | 0.65 | 0.012 | 0.0016 | 0.036 | 0.0033 | 0 | 0 | 0 | 0 | 0 |
| 239 | 202 | 0.12 | 0.83 | 0.65 | 0.012 | 0.0016 | 0.036 | 0.0033 | 0 | 0 | 0 | 0 | 0 |
| 240 | 202 | 0.12 | 0.83 | 0.65 | 0.012 | 0.0016 | 0.036 | 0.0033 | 0 | 0 | 0 | 0 | 0 |

In the table, fields in which chemical constituent is "0" indicate corresponding constituent is not intentionally added.

[Table 11-1]

Table 11-1

| Man. no. | Hot rolling | | | | | | | Cold rolling | Heating rate (°C/s) | Heating temp. (°C) | Heat treatment step at hot stamping | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. (°C) | Coiling temp. (°C) | Cold rolling rate (%) | | | Average cooling rate from heating temp. to 400°C (°C/s) | Average cooling rate from 400°C to 200°C (°C/s) | Tempering temp. (°C) | Plating | |
| 201 | 1260 | 101 | 1164 | 38 | 3 | 892 | 694 | 46 | 37 | 835 | 75 | 30 | None | None | 1.5 |
| 202 | 1237 | 91 | 1150 | 35 | 3 | 843 | 709 | 57 | 31 | 860 | 116 | 15 | None | None | 1.2 |
| 203 | 1239 | 104 | 1130 | 28 | 3 | 889 | 673 | 46 | 43 | 875 | 74 | 18 | None | None | 1.5 |
| 204 | 1279 | 98 | 1170 | 34 | 3 | 922 | 648 | 55 | 59 | 911 | 100 | 30 | None | None | 1.3 |
| 205 | 1286 | 122 | 1138 | 32 | 3 | 869 | 568 | 54 | 49 | 838 | 77 | 23 | None | None | 1.3 |
| 206 | 1274 | 127 | 1144 | 34 | 3 | 895 | 677 | 45 | 65 | 893 | 54 | 29 | None | None | 1.5 |
| 207 | 1282 | 101 | 1199 | 38 | 3 | 887 | 685 | 51 | 64 | 817 | 72 | 27 | None | None | 1.4 |
| 208 | 1262 | 112 | 1136 | 44 | 3 | 898 | 710 | 56 | 50 | 821 | 75 | 12 | None | None | 1.2 |
| 209 | 1291 | 112 | 1148 | 29 | 3 | 908 | 719 | 47 | 29 | 884 | 82 | 11 | None | None | 1.5 |
| 210 | 1296 | 101 | 1146 | 34 | 3 | 850 | 583 | 48 | 47 | 852 | 75 | 19 | None | None | 1.5 |
| 211 | 1259 | 124 | 1141 | 33 | 3 | 854 | 527 | 53 | 56 | 864 | 88 | 35 | None | None | 1.3 |
| 212 | 1273 | 89 | 1196 | 39 | 3 | 888 | 697 | 51 | 60 | 904 | 87 | 14 | None | None | 1.4 |
| 213 | 1249 | 89 | 1177 | 30 | 3 | 861 | 648 | 53 | 23 | 885 | 71 | 28 | None | None | 1.3 |
| 214 | 1288 | 104 | 1144 | 40 | 3 | 898 | 600 | 55 | 39 | 818 | 80 | 27 | None | None | 1.3 |
| 215 | 1246 | 80 | 1172 | 36 | 3 | 847 | 679 | 57 | 24 | 859 | 72 | 18 | None | None | 1.2 |
| 216 | 1269 | 120 | 1135 | 36 | 3 | 841 | 684 | 57 | 32 | 904 | 91 | 19 | None | None | 1.2 |
| 217 | 1280 | 105 | 1125 | 44 | 3 | 847 | 734 | 46 | 66 | 879 | 99 | 12 | None | None | 1.5 |
| 218 | 1261 | 117 | 1149 | 39 | 3 | 824 | 647 | 56 | 49 | 911 | 88 | 18 | None | None | 1.2 |

(continued)

| Man. no. | Hot rolling | | | | | | | Cold rolling | Heat treatment step at hot stamping | | | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 219 | 1245 | 93 | 1156 | 39 | 3 | 846 | 563 | 47 | 21 | 916 | 77 | 34 | None | None | 1.5 |
| 220 | 1282 | 117 | 1118 | 41 | 3 | 898 | 664 | 57 | 24 | 862 | 100 | 19 | None | None | 1.2 |

[Table 11-2]

Table 11-2

| Man. no. | Hot rolling | | | | | | | Cold rolling | | Heat treatment step at hot stamping | | | | | Thickness after hot stamping (mm) |
| --- | --- | --- | --- | --- | --- | --- | --- | --- | --- | --- | --- | --- | --- | --- | --- |
| | Heating temp. (°C) | Holding time (min) | Rougli rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 221 | 1281 | 73 | 1167 | 45 | 3 | 818 | 674 | 46 | 20 | 812 | 104 | 15 | None | None | 1.5 |
| 222 | 1262 | 111 | 1170 | 34 | 3 | 841 | 655 | 48 | 20 | 893 | 89 | 28 | None | None | 1.5 |
| 223 | 1269 | 96 | 1128 | 40 | 3 | 876 | 587 | 46 | 63 | 913 | 109 | 28 | None | None | 1.5 |
| 224 | 1263 | 95 | 1161 | 38 | 3 | 916 | 629 | 54 | 64 | 890 | 92 | 26 | None | None | 1.3 |
| 225 | 1275 | 97 | 1143 | 40 | 3 | 894 | 664 | 54 | 53 | 943 | 112 | 25 | None | None | 1.3 |
| 226 | 1268 | 119 | 1134 | 25 | 3 | 898 | 713 | 47 | 28 | 885 | 85 | 9 | None | None | 1.5 |
| 227 | 1259 | 131 | 1184 | 31 | 3 | 827 | 679 | 55 | 73 | 893 | 83 | 13 | None | None | 1.3 |
| 228 | 1247 | 80 | 1173 | 25 | 3 | 835 | 650 | 54 | 31 | 890 | 113 | 13 | None | None | 1.3 |
| 229 | 1305 | 102 | 1140 | 37 | 3 | 900 | 705 | 48 | 42 | 845 | 79 | 27 | None | None | 1.5 |
| 230 | **891** | 125 | **881** | 38 | 3 | 901 | 646 | 46 | 49 | 887 | 96 | 25 | None | None | 1.5 |
| 231 | **1392** | 79 | 1137 | 41 | 3 | 826 | 636 | 57 | 74 | 918 | 73 | 25 | None | None | 1.2 |
| 232 | 1290 | **16** | 1141 | 39 | 3 | 861 | 625 | 56 | 62 | 886 | 75 | 27 | None | None | 1.2 |
| 233 | 1278 | 97 | 1129 | 27 | 3 | 842 | 550 | 45 | 61 | 914 | 60 | 14 | None | None | 1.5 |
| 234 | 1276 | 128 | 1129 | 32 | 3 | 870 | 678 | 0 | 53 | 899 | 70 | 26 | None | None | 2.8 |
| 235 | 1291 | 83 | 1140 | 42 | 3 | 841 | 560 | 48 | 61 | 940 | 74 | 20 | 262 | None | 1.5 |
| 236 | 1274 | 89 | 1161 | 35 | 3 | 882 | 545 | 57 | 53 | 921 | 96 | 32 | 278 | Yes | 1.2 |
| 237 | 1283 | 110 | 1112 | 40 | 3 | 836 | 554 | 46 | 30 | 842 | 84 | 21 | None | Yes | 1.5 |
| 238 | 1282 | 117 | **1009** | 38 | 3 | 841 | 629 | 57 | 28 | 890 | 85 | 29 | None | None | 1.5 |

| Man. no. | Hot rolling | | | | | | | Cold rolling | | Heat treatment step at hot stamping | | | | | Thickness after hot stamping (mm) |
| --- | --- | --- | --- | --- | --- | --- | --- | --- | --- | --- | --- | --- | --- | --- | --- |
| | Heating temp. (°C) | Holding time (min) | Rougli rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 239 | 1275 | 95 | 1161 | 3 | 2 | 894 | 713 | 47 | 68 | 890 | 76 | 26 | None | None | 1.2 |
| 240 | 1247 | 119 | 1140 | 40 | 1 | 835 | 550 | 54 | 26 | 918 | 106 | 35 | None | None | 1.5 |

EP 3 584 341 A1

[Table 12-1]

Table 12-1

| Man. no. | Microstructure | | | | Mechanical properties | | | | Remarks |
|---|---|---|---|---|---|---|---|---|---|
| | Hardness of middle part in sheet thickness (Hv) | $\Delta H_1$ (Hv) | $\Delta H_2$ (Hv) | Area rate of residual austenite (%) | Tensile strength (MPa) | Uniform elongation (%) | Max. bending angle (°) | Hydrogen embrittlement resistance | |
| 201 | 529 | 191 | 48 | 3.3 | 1535 | 6.5 | 102.9 | Good | Inv.ex. |
| 202 | 654 | 175 | 35 | 4.0 | 1896 | 6.8 | 105.0 | Good | Inv.ex. |
| 203 | 725 | 175 | 48 | 3.4 | 2101 | 6.5 | 103.7 | Good | Inv.ex. |
| 204 | 792 | 132 | 35 | 2.0 | 2297 | 5.0 | 100.9 | Good | Inv.ex. |
| 205 | **411** | 187 | 44 | 2.7 | **1192** | 5.8 | 104.3 | Good | **Comp.ex.** |
| 206 | 588 | 192 | 45 | 2.7 | 1704 | 6.2 | 103.8 | Good | Inv.ex. |
| 207 | 622 | 122 | 14 | 3.4 | 1803 | 6.6 | 103.1 | Good | Inv.ex. |
| 208 | 687 | 195 | 39 | 2.3 | 1994 | 5.5 | 101.6 | Good | Inv.ex. |
| 209 | **908** | 197 | 41 | 1.8 | 2633 | 5.3 | **58.5** | Good | **Comp.ex.** |
| 210 | 664 | 181 | 48 | **0.4** | 1925 | **3.9** | 104.9 | Good | Inv.ex. |
| 211 | 665 | 117 | 28 | **0.8** | 1928 | **4.6** | 101.8 | Good | Inv.ex. |
| 212 | **397** | 182 | 48 | 2.1 | **1310** | 5.6 | 100.9 | Good | **Comp.ex.** |
| 213 | 663 | 144 | 39 | 3.9 | 1922 | 6.6 | 102.0 | Good | Inv.ex. |
| 214 | 664 | 148 | 20 | 4.1 | 1925 | 6.5 | 103.4 | Good | Inv.ex. |
| 215 | 648 | 152 | 29 | 4.1 | 1878 | 6.9 | 101.3 | Good | Inv.ex. |
| 216 | 653 | 193 | 48 | 1.9 | 1893 | 7.0 | 103.0 | Good | Inv.ex. |
| 217 | 661 | 181 | 45 | 3.0 | 1917 | 5.9 | 102.9 | Good | Inv.ex. |
| 218 | 518 | 184 | 40 | 4.4 | 1503 | 6.6 | 103.5 | Good | Inv.ex. |
| 219 | 522 | 172 | 43 | 3.0 | 1514 | 6.5 | 106.8 | Good | Inv.ex. |
| 220 | 521 | 197 | 36 | 2.7 | 1511 | 6.1 | 107.6 | Good | Inv.ex. |

[Table 12-2]

Table 12-2

| Man. no. | Microstructure | | | | Mechanical properties | | | | Remarks |
|---|---|---|---|---|---|---|---|---|---|
| | Hardness of middle part in sheet thickness (Hv) | $\Delta H_1$ (Hv) | $\Delta H_2$ (Hv) | Area rate of residual austenite (%) | Tensile strength (MPa) | Uniform elongation (%) | Max. bending angle (°) | Hydrogen embrittlement resistance | |
| 221 | 662 | 157 | 21 | 2.0 | 1919 | 5.0 | 102.2 | Good | Inv.ex. |
| 222 | 660 | 163 | 31 | 3.7 | 1913 | 6.8 | 112.0 | Good | Inv.ex. |
| 223 | 651 | 164 | 27 | 2.8 | 1887 | 6.0 | 99.7 | Good | Inv.ex. |
| 224 | 730 | 167 | 40 | 2.6 | 2116 | 6.0 | 107.4 | Good | Inv.ex. |
| 225 | 721 | 154 | 48 | 3.2 | 2090 | 6.5 | 103.8 | Good | Inv.ex. |
| 226 | 734 | 148 | 44 | 4.1 | 2127 | 7.0 | 96.1 | Good | Inv.ex. |
| 227 | 777 | 152 | 28 | 2.3 | 2253 | 5.3 | 108.6 | Good | Inv.ex. |
| 228 | 780 | 122 | 31 | 2.3 | 2262 | 5.4 | 101.7 | Good | Inv.ex. |
| 229 | 791 | 138 | 24 | 2.6 | 2294 | 5.6 | 108.8 | Good | Inv.ex. |
| 230 | 651 | **218** | **3** | 3.3 | 1887 | 6.6 | **68.5** | **Poor** | **Comp.ex.** |
| 231 | 650 | **5** | **218** | 3.9 | 1884 | 6.9 | **62.7** | Good | **Comp.ex.** |
| 232 | 658 | **221** | **2** | 4.2 | 1908 | 5.7 | **66.6** | **Poor** | **Comp.ex.** |
| 233 | 651 | 128 | 23 | 3.8 | 1887 | 5.9 | 102.5 | Good | Inv.ex. |
| 234 | 652 | 177 | 47 | 3.5 | 1890 | 6.7 | 101.0 | Good | Inv.ex. |
| 235 | 735 | 152 | 31 | 2.4 | 2132 | 5.7 | 98.1 | Good | Inv.ex. |
| 236 | 744 | 162 | 30 | 2.5 | 2158 | 5.9 | 98.5 | Good | Inv.ex. |
| 237 | 650 | 175 | 30 | 2.3 | 1884 | 5.6 | 104.4 | Good | Inv.ex. |
| 238 | 635 | **201** | **4** | 2.8 | 2096 | 6.0 | **60.9** | **Poor** | **Comp.ex.** |
| 239 | 640 | **209** | **9** | 2.9 | 2112 | 6.5 | **62.8** | **Poor** | **Comp.ex.** |
| 240 | 655 | **207** | **6** | 3.2 | 2162 | 6.6 | **60.7** | **Poor** | **Comp.ex.** |

In the examples, the impact resistance of the hot stamped body was evaluated from the viewpoint of ductility as well. Specifically, a tensile test of the hot stamped steel sheet was performed to find the uniform elongation of the steel sheet and evaluate the impact resistance. The tensile test was performed by preparing a No. 5 test piece described in JIS Z 2201 and following the test method described in JIS Z 2241. The elongation at which the greatest tensile load was obtained was defined as the "uniform elongation".

In the same way as the case of Example A, a case where the tensile strength is 1500 MPa or more, the maximum bending angle (°) is 90 (°) or more, and the hydrogen embrittlement resistance is of the passing level was evaluated as a hot stamped body excellent in impact resistance and hydrogen embrittlement resistance (invention examples in Table 12). Further, a case where the uniform elongation is 5% or more was evaluated as improved in impact resistance even from the viewpoint of ductility in addition to bendability (invention examples other than Examples 210 and 211 in Table 12). On the other hand, a case where even one of the requirements of "tensile strength", "maximum bending angle", and "hydrogen embrittlement resistance" failed to be satisfied was designated as a comparative example.

[Example D (Mn: 1.50% or more and less than 3.00% and Si: more than 0.50% and less than 3.00%)]

A matrix steel sheet having the chemical constituents shown in Table 13 was ground on its surface to remove surface oxides, then a surface layer steel sheet having the chemical constituents shown in Table 14 was welded with both surfaces or one surface by arc welding. The total thickness of the surface layer steel sheet and the matrix steel sheet after arc welding is 200 mm to 300 mm and the thickness of the surface layer steel sheet is 1/3 or so the thickness of the matrix steel sheet (in the case of a single side, 1/4 or so). Manufacturing Nos. 301 to 339 and 341 to 343 are steels with surface layer steel sheets welded to both surfaces, Manufacturing No. 340 is steel with a surface layer steel sheet welded to only one surface. These multilayer steel sheets are hot rolled and/or cold rolled as shown in Table 15. The obtained steel sheets are heat treated as shown in Table 15 and hot stamped to produce stamped bodies. Table 16 shows the microstructures and mechanical characteristics of the hot stamped steel sheets (hot stamped bodies). The chemical constituents analyzed at sheet thickness 1/2 positions of samples taken from the hot stamped steel sheets and at positions of 20 μm from the surfaces (positions within surface layers) are equivalent to the chemical constituents of the matrix steel sheets and surface layer steel sheets shown in Tables 13 and 14.

[Table 13-1]

Table 13-1

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 301 | 0.21 | 1.42 | 1.77 | 0.021 | 0.0032 | 0.055 | 0.0031 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 303 | 0.35 | 1.58 | 1.71 | 0.014 | 0.0011 | 0.040 | 0.0027 | 0 | 0 | 0 | 0 | 0 |
| 304 | 0.44 | 1.44 | 1.98 | 0.019 | 0.0017 | 0.041 | 0.0041 | 0 | 0 | 0 | 0 | 0 |
| 305 | **0.10** | 1.27 | 1.86 | 0.014 | 0.0022 | 0.038 | 0.0043 | 0 | 0 | 0 | 0 | 0 |
| 306 | 0.29 | 1.43 | 1.88 | 0.007 | 0.0021 | 0.046 | 0.0044 | 0 | 0 | 0 | 0 | 0 |
| 307 | 0.33 | 1.78 | 1.79 | 0.008 | 0.0031 | 0.048 | 0.0036 | 0 | 0 | 0 | 0 | 0 |
| 308 | 0.39 | 1.73 | 1.97 | 0.004 | 0.0001 | 0.051 | 0.0032 | 0 | 0 | 0 | 0 | 0 |
| 309 | **0.82** | 1.69 | 1.83 | 0.012 | 0.0032 | 0.044 | 0.0029 | 0 | 0 | 0 | 0 | 0 |
| 310 | 0.31 | **0.24** | 2.00 | 0.010 | 0.0021 | 0.044 | 0.0019 | 0 | 0 | 0 | 0 | 0 |
| 311 | 0.26 | **0.39** | 1.92 | 0.010 | 0.0006 | 0.043 | 0.0032 | 0 | 0 | 0 | 0 | 0 |
| 312 | 0.34 | 1.23 | **0.11** | 0.007 | 0.0027 | 0.047 | 0.0038 | 0 | 0 | 0 | 0 | 0 |
| 313 | 0.35 | 1.18 | **0.80** | 0.009 | 0.0014 | 0.048 | 0.0040 | 0 | 0 | 0 | 0 | 0 |
| 314 | 0.29 | **0.32** | **0.22** | 0.010 | 0.0010 | 0.045 | 0.0029 | 0 | 0 | 0 | 0 | 0 |
| 315 | 0.26 | **0.41** | **0.76** | 0.009 | 0.0007 | 0.056 | 0.0026 | 0 | 0 | 0 | 0 | 0 |

(continued)

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 316 | 0.40 | 1.58 | 1.78 | 0.010 | 0.0032 | 0.055 | 0.0032 | 2.21 | 0 | 0 | 0 | 0 |
| 317 | 0.36 | 1.07 | 1.75 | 0.014 | 0.0033 | 0.047 | 0.0022 | 0 | 0.078 | 0 | 0 | 0 |
| 318 | 0.36 | 1.64 | 1.98 | 0.015 | 0.0033 | 0.046 | 0.0025 | 0 | 0 | 0.046 | 0 | 0 |
| 319 | 0.31 | 1.29 | 1.90 | 0.016 | 0.0013 | 0.054 | 0.0031 | 0 | 0 | 0 | 0.05 | 0 |
| 320 | 0.31 | 1.40 | 1.72 | 0.018 | 0.0011 | 0.042 | 0.0041 | 0 | 0 | 0 | 0 | 0.0025 |

In the table, fields in which chemical constituent is "0" indicate corresponding constituent is not intentionally added.

[Table 13-2]

Table 13-2

| Matrix steel sheet no. | Chemical constituents of matrix steel sheet (mass%) | | | | | | | | | | | |
|---|---|---|---|---|---|---|---|---|---|---|---|---|
| | C | Si | Mn | P | S | sol. Al | N | Ni | Nb | Ti | Mo | B |
| 301 | 0.21 | 1.42 | 1.77 | 0.021 | 0.0032 | 0.055 | 0.0031 | 0 | 0 | 0 | 0 | 0 |
| 301 | 0.21 | 1.42 | 1.77 | 0.021 | 0.0032 | 0.055 | 0.0031 | 0 | 0 | 0 | 0 | 0 |
| 301 | 0.21 | 1.42 | 1.77 | 0.021 | 0.0032 | 0.055 | 0.0031 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 303 | 0.35 | 1.58 | 1.71 | 0.014 | 0.0011 | 0.040 | 0.0027 | 0 | 0 | 0 | 0 | 0 |
| 303 | 0.35 | 1.58 | 1.71 | 0.014 | 0.0011 | 0.040 | 0.0027 | 0 | 0 | 0 | 0 | 0 |
| 303 | 0.35 | 1.58 | 1.71 | 0.014 | 0.0011 | 0.040 | 0.0027 | 0 | 0 | 0 | 0 | 0 |
| 304 | 0.44 | 1.44 | 1.98 | 0.019 | 0.0017 | 0.041 | 0.0041 | 0 | 0 | 0 | 0 | 0 |
| 304 | 0.44 | 1.44 | 1.98 | 0.019 | 0.0017 | 0.041 | 0.0041 | 0 | 0 | 0 | 0 | 0 |
| 304 | 0.44 | 1.44 | 1.98 | 0.019 | 0.0017 | 0.041 | 0.0041 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 321 | 0.69 | 1.32 | 1.83 | 0.011 | 0.0035 | 0.032 | 0.0024 | 0 | 0 | 0 | 0 | 0 |
| 321 | 0.69 | 1.32 | 1.83 | 0.011 | 0.0035 | 0.032 | 0.0024 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |
| 302 | 0.29 | 1.35 | 1.95 | 0.008 | 0.0026 | 0.049 | 0.0025 | 0 | 0 | 0 | 0 | 0 |

In the table, fields in which chemical constituent is "0" indicate corresponding constituent is not intentionally added.

[Table 14-1]

[Table 14-1]

Table 14-1

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | p | S | sol. Al | N | Ni | Nb | Ti | Mo | B |
| 301 | 301 | 0.10 | 0.75 | 0.90 | 0.012 | 0.0019 | 0.043 | 0.0029 | 0 | 0 | 0 | 0 | 0 |
| 302 | 302 | 0.15 | 0.66 | 0.98 | 0.013 | 0.0018 | 0.039 | 0.0037 | 0 | 0 | 0 | 0 | 0 |
| 303 | 303 | 0.20 | 0.65 | 0.75 | 0.014 | 0.0016 | 0.043 | 0.0040 | 0 | 0 | 0 | 0 | 0 |
| 304 | 304 | 0.23 | 0.78 | 0.99 | 0.013 | 0.0005 | 0.037 | 0.0030 | 0 | 0 | 0 | 0 | 0 |
| 305 | 305 | 0.05 | 0.56 | 0.95 | 0.010 | 0.0009 | 0.037 | 0.0031 | 0 | 0 | 0 | 0 | 0 |
| 306 | 306 | 0.17 | 0.72 | 0.83 | 0.007 | 0.0021 | 0.038 | 0.0029 | 0 | 0 | 0 | 0 | 0 |
| 307 | 307 | 0.15 | 0.71 | 0.84 | 0.016 | 0.0009 | 0.040 | 0.0033 | 0 | 0 | 0 | 0 | 0 |
| 308 | 308 | 0.16 | 0.81 | 1.02 | 0.010 | 0.0004 | 0.040 | 0.0033 | 0 | 0 | 0 | 0 | 0 |
| 309 | 309 | 0.42 | 0.73 | 0.95 | 0.014 | 0.0006 | 0.039 | 0.0023 | 0 | 0 | 0 | 0 | 0 |
| 310 | 310 | 0.13 | 0.11 | 0.96 | 0.017 | 0.0021 | 0.036 | 0.0029 | 0 | 0 | 0 | 0 | 0 |
| 311 | 311 | 0.12 | 0.20 | 1.00 | 0.015 | 0.0024 | 0.042 | 0.0032 | 0 | 0 | 0 | 0 | 0 |
| 312 | 312 | 0.14 | 0.57 | 0.06 | 0.011 | 0.0026 | 0.037 | 0.0028 | 0 | 0 | 0 | 0 | 0 |
| 313 | 313 | 0.20 | 0.57 | 0.37 | 0.010 | 0.0025 | 0.039 | 0.0028 | 0 | 0 | 0 | 0 | 0 |
| 314 | 314 | 0.14 | 0.16 | 0.10 | 0.013 | 0.0025 | 0.038 | 0.0035 | 0 | 0 | 0 | 0 | 0 |
| 315 | 315 | 0.11 | 0.21 | 0.37 | 0.008 | 0.0016 | 0.041 | 0.0022 | 0 | 0 | 0 | 0 | 0 |
| 316 | 316 | 0.23 | 0.68 | 0.89 | 0.014 | 0.0015 | 0.032 | 0.0032 | 0.07 | 0 | 0 | 0 | 0 |
| 317 | 317 | 0.20 | 0.47 | 0.84 | 0.011 | 0.0003 | 0.043 | 0.0029 | 0 | 0.021 | 0 | 0 | 0 |
| 318 | 318 | 0.14 | 0.87 | 0.91 | 0.016 | 0.0018 | 0.047 | 0.0028 | 0 | 0 | 0.001 | 0 | 0 |
| 319 | 319 | 0.18 | 0.61 | 0.95 | 0.007 | 0.0020 | 0.039 | 0.0039 | 0 | 0 | 0 | 0.03 | 0 |
| 320 | 320 | 0.15 | 0.71 | 0.81 | 0.021 | 0.0007 | 0.044 | 0.0033 | 0 | 0 | 0 | 0 | 0.0018 |

In the table, fields in which chemical constituent is "0" indicate corresponding constituent is not intentionally added.

[Table 14-2]

Table 14-2

| Man. no. | Matrix steel sheet no. | Chemical constituents of surface layer steel sheet (mass%) | | | | | | | | | | | |
|---|---|---|---|---|---|---|---|---|---|---|---|---|---|
| | | C | Si | Mn | P | S | sol. Al | N | Ni | Nb | Ti | Mo | B |
| 321 | 301 | 0.08 | 1.25 | 1.43 | 0.008 | 0.0017 | 0.040 | 0.0029 | 0 | 0 | 0 | 0 | 0 |
| 322 | 301 | 0.11 | 1.29 | 0.99 | 0.006 | 0.0006 | 0.040 | 0.0022 | 0 | 0 | 0 | 0 | 0 |
| 323 | 301 | 0.11 | 0.51 | 1.50 | 0.012 | 0.0016 | 0.045 | 0.0036 | 0 | 0 | 0 | 0 | 0 |
| 324 | 302 | 0.26 | 0.69 | 0.98 | 0.008 | 0.0010 | 0.038 | 0.0034 | 0 | 0 | 0 | 0 | 0 |
| 325 | 302 | 0.28 | 0.77 | 1.58 | 0.008 | 0.0014 | 0.033 | 0.0031 | 0 | 0 | 0 | 0 | 0 |
| 326 | 302 | 0.23 | 1.38 | 0.60 | 0.013 | 0.0010 | 0.039 | 0.0029 | 0 | 0 | 0 | 0 | 0 |
| 327 | 303 | 0.22 | 0.68 | 0.89 | 0.011 | 0.0008 | 0.046 | 0.0028 | 0 | 0 | 0 | 0 | 0 |
| 328 | 303 | 0.16 | 1.53 | 0.77 | 0.018 | 0.0021 | 0.044 | 0.0024 | 0 | 0 | 0 | 0 | 0 |
| 329 | 303 | 0.15 | 0.87 | 1.30 | 0.009 | 0.0011 | 0.042 | 0.0030 | 0 | 0 | 0 | 0 | 0 |
| 330 | 304 | 0.39 | 0.65 | 0.99 | 0.010 | 0.0018 | 0.037 | 0.0035 | 0 | 0 | 0 | 0 | 0 |
| 331 | 304 | 0.18 | 1.15 | 1.03 | 0.021 | 0.0013 | 0.032 | 0.0032 | 0 | 0 | 0 | 0 | 0 |
| 332 | 304 | 0.28 | 0.72 | 1.70 | 0.009 | 0.0007 | 0.037 | 0.0026 | 0 | 0 | 0 | 0 | 0 |
| 333 | 302 | 0.15 | 0.61 | 1.01 | 0.010 | 0.0016 | 0.039 | 0.0030 | 0 | 0 | 0 | 0 | 0 |
| 334 | 302 | 0.16 | 0.63 | 0.96 | 0.015 | 0.0016 | 0.039 | 0.0034 | 0 | 0 | 0 | 0 | 0 |
| 335 | 302 | 0.15 | 0.66 | 0.88 | 0.012 | 0.0007 | 0.036 | 0.0031 | 0 | 0 | 0 | 0 | 0 |
| 336 | 302 | 0.15 | 0.74 | 0.94 | 0.011 | 0.0016 | 0.045 | 0.0034 | 0 | 0 | 0 | 0 | 0 |
| 337 | 302 | 0.13 | 0.65 | 0.92 | 0.013 | 0.0010 | 0.034 | 0.0037 | 0 | 0 | 0 | 0 | 0 |
| 338 | 321 | 0.28 | 0.66 | 0.95 | 0.015 | 0.0023 | 0.037 | 0.0033 | 0 | 0 | 0 | 0 | 0 |
| 339 | 321 | 0.32 | 0.66 | 0.84 | 0.011 | 0.0024 | 0.035 | 0.0025 | 0 | 0 | 0 | 0 | 0 |
| 340 | 302 | 0.15 | 0.62 | 0.94 | 0.012 | 0.0016 | 0.035 | 0.0040 | 0 | 0 | 0 | 0 | 0 |
| 341 | 302 | 0.15 | 0.66 | 0.98 | 0.013 | 0.0018 | 0.039 | 0.0037 | 0 | 0 | 0 | 0 | 0 |
| 342 | 302 | 0.15 | 0.66 | 0.98 | 0.013 | 0.0018 | 0.039 | 0.0037 | 0 | 0 | 0 | 0 | 0 |
| 343 | 302 | 0.15 | 0.66 | 0.98 | 0.013 | 0.0018 | 0.039 | 0.0037 | 0 | 0 | 0 | 0 | 0 |

In the table, fields in which chemical constituent is "0" indicate corresponding constituent is not intentionally added.

[Table 15-1]

Table 15-1

| Man. no. | Hot rolling | | | | | | | Cold rolling | | Heat treatment step at hot stampining | | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (% ) | Heating rate (°C/s) | Heating temp. (°C) | Average cooling rate from heating temp. to 400°Ce (°C/s) | Average cooling rate from 400°C to 200°C (°C/s) | Tempering temp. (°C) | Plating | |
| 301 | 1252 | 91 | 1164 | 38 | 3 | 908 | 651 | 58 | 37 | 896 | 75 | 30 | None | None | 1.2 |
| 302 | 1235 | 101 | 1150 | 35 | 3 | 896 | 618 | 47 | 31 | 826 | 116 | 15 | None | None | 1.5 |
| 303 | 1238 | 100 | 1130 | 28 | 3 | 904 | 581 | 46 | 43 | 856 | 74 | 18 | None | None | 1.5 |
| 304 | 1271 | 92 | 1170 | 34 | 3 | 910 | 607 | 55 | 59 | 873 | 100 | 30 | None | None | 1.3 |
| 305 | 1284 | 127 | 1138 | 32 | 3 | 901 | 642 | 52 | 49 | 820 | 77 | 23 | None | None | 1.3 |
| 306 | 1275 | 127 | 1144 | 34 | 3 | 883 | 722 | 52 | 65 | 899 | 54 | 29 | None | None | 1.3 |
| 307 | 1277 | 102 | 1199 | 38 | 3 | 856 | 618 | 57 | 64 | 821 | 72 | 27 | None | None | 1.2 |
| 308 | 1250 | 121 | 1136 | 44 | 3 | 886 | 740 | 46 | 50 | 859 | 75 | 12 | None | None | 1.5 |
| 309 | 1281 | 105 | 1148 | 29 | 3 | 841 | 635 | 56 | 29 | 896 | 82 | 11 | None | None | 12 |
| 310 | 1292 | 99 | 1146 | 34 | 3 | 892 | 723 | 49 | 47 | 899 | 75 | 19 | None | None | 1.4 |
| 311 | 1262 | 127 | 1141 | 33 | 3 | 919 | 625 | 54 | 56 | 829 | 88 | 35 | None | None | 1.3 |
| 312 | 1263 | 99 | 1196 | 39 | 3 | 910 | 654 | 57 | 60 | 907 | 87 | 14 | None | None | 1.2 |
| 313 | 1247 | 87 | 1177 | 30 | 3 | 830 | 728 | 50 | 23 | 863 | 71 | 28 | None | None | 1.4 |
| 314 | 1288 | 113 | 1144 | 40 | 3 | 857 | 563 | 45 | 39 | 885 | 80 | 27 | None | None | 1.5 |
| 315 | 1243 | 78 | 1172 | 36 | 3 | 872 | 701 | 49 | 24 | 910 | 72 | 18 | None | None | 1.4 |
| 316 | 1257 | 126 | 1135 | 36 | 3 | 914 | 725 | 56 | 32 | 896 | 91 | 19 | None | None | 1.2 |
| 317 | 1273 | 98 | 1125 | 44 | 3 | 871 | 645 | 53 | 66 | 876 | 99 | 12 | None | None | 1.3 |
| 318 | 1257 | 113 | 1149 | 39 | 3 | 868 | 738 | 51 | 49 | 924 | 88 | 18 | None | None | 1.4 |

(continued)

| Man. no. | Hot rolling | | | | | | | Cold rolling | | Heat treatment step at hot stampining | | | | | Thickness after hot stamping (mm) |
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°Ce (°C/s) | Average cooling rate from 400°C to 200°C (°C/s) | Tempering temp. (°C) | Plating | |
|---|---|---|---|---|---|---|---|---|---|---|---|---|---|---|---|
| 319 | 1234 | 94 | 1156 | 39 | 3 | 882 | 654 | 48 | 21 | 829 | 77 | 34 | None | None | 1.5 |
| 320 | 1268 | 126 | 1118 | 41 | 3 | 851 | 713 | 53 | 24 | 858 | 100 | 19 | None | None | 1.3 |

[Table 15-2]

Table 15-2

| Man. no. | Hot rolling | | | | | | | Cold rolling | Heat treatment step at hot stamping | | | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. (°C) | Coiling temp. (°C) | Cold rolling rate (%) | Heating rate (°C/s) | Heating temp. (°C) | Average cooling rate from heating temp. to 400°C (°C/s) | Average cooling rate from 400°C to 200°C (°C/s) | Tempering temp. (°C) | Plating | |
| 321 | 1281 | 71 | 1167 | 45 | 3 | 859 | 700 | 54 | 20 | 862 | 104 | 15 | None | None | 1.3 |
| 322 | 1251 | 102 | 1170 | 34 | 3 | 853 | 636 | 53 | 20 | 899 | 89 | 28 | None | None | 1.3 |
| 323 | 1272 | 94 | 1128 | 40 | 3 | 904 | 555 | 46 | 63 | 866 | 109 | 28 | None | None | 1.5 |
| 324 | 1250 | 91 | 1161 | 38 | 3 | 920 | 727 | 58 | 64 | 852 | 92 | 26 | None | None | 1.2 |
| 325 | 1272 | 102 | 1143 | 40 | 3 | 905 | 637 | 57 | 53 | 828 | 112 | 25 | None | None | 1.2 |
| 326 | 1255 | 118 | 1134 | 25 | 3 | 873 | 628 | 53 | 28 | 842 | 85 | 9 | None | None | 1.3 |
| 327 | 1246 | 133 | 1184 | 31 | 3 | 886 | 619 | 45 | 73 | 901 | 83 | 13 | None | None | 1.5 |
| 328 | 1237 | 88 | 1173 | 25 | 3 | 846 | 589 | 53 | 31 | 891 | 113 | 13 | None | None | 1.3 |
| 329 | 1241 | 110 | 1140 | 37 | 3 | 908 | 696 | 45 | 42 | 888 | 79 | 27 | None | None | 1.5 |
| 330 | 1232 | 133 | 1149 | 38 | 3 | 841 | 564 | 48 | 49 | 885 | 96 | 25 | None | None | 1.5 |
| 331 | 1248 | 71 | 1137 | 41 | 3 | 859 | 592 | 50 | 74 | 918 | 73 | 25 | None | None | 1.4 |
| 332 | 1247 | 72 | 1141 | 39 | 3 | 838 | 665 | 53 | 62 | 896 | 75 | 27 | None | None | 1.3 |
| 333 | **965** | 98 | **955** | 27 | 3 | 880 | 640 | 47 | 61 | 841 | 60 | 14 | None | None | 1.5 |
| 334 | **1388** | 120 | 1129 | 32 | 3 | 868 | 577 | 56 | 53 | 833 | 70 | 26 | None | None | 1.2 |
| 335 | 1244 | **13** | 1140 | 42 | 3 | 843 | 559 | 58 | 61 | 837 | 74 | 20 | None | None | 1.2 |
| 336 | 1235 | 95 | 1161 | 35 | 3 | 843 | 675 | 45 | 53 | 880 | 96 | 32 | None | None | 1.5 |
| 337 | 1243 | 105 | 1112 | 40 | 3 | 890 | 728 | 0 | 30 | 927 | 84 | 21 | None | None | 2.8 |
| 338 | 1242 | 91 | 1118 | 40 | 3 | 864 | 575 | 57 | 73 | 863 | 99 | 19 | 277 | None | 1.2 |

| Man. no. | Hot rolling | | | | | | | Cold rolling | | Heat treatment step at hot stamping | | | | | Thickness after hot stamping (mm) |
|---|---|---|---|---|---|---|---|---|---|---|---|---|---|---|---|
| | Heating temp. (°C) | Holding time (min) | Rough rolling temp. (°C) | Thickness reduction rate (%) | No. of rolling operations with time between passes of 3 sec or more | Finish temp. temp. (°C) | Coiling temp. temp. (°C) | Cold rolling rate (%) | Heating rate (°C/s) | Heating temp. (°C) | Average cooling rate from heating temp. to 400°C C/s) | Average cooling rate from 400°C to 200°C (°C/s) | Tempering temp. (°C) | Plating | |
| 339 | 1234 | 83 | 1128 | 41 | 3 | 893 | 615 | 57 | 49 | 863 | 100 | 19 | 260 | Yes | 1.2 |
| 340 | 1247 | 87 | 1134 | 34 | 3 | 911 | 591 | 54 | 53 | 925 | 92 | 26 | None | Yes | 1.3 |
| 341 | 1281 | 113 | **1021** | 38 | 3 | 851 | 628 | 53 | 28 | 885 | 85 | 29 | None | None | 1.3 |
| 342 | 1250 | 71 | 1161 | **4** | 2 | 905 | 592 | 53 | 68 | 841 | 76 | 26 | None | None | 1.5 |
| 343 | 1242 | 118 | 1140 | 40 | **1** | 846 | 577 | 45 | 26 | 880 | 106 | 35 | None | None | 1.5 |

[Table 16-1]

Table 16-1

| Man. no. | Microstructure | | | | Mechanical properties | | | | | | | Remarks |
|---|---|---|---|---|---|---|---|---|---|---|---|---|
| | Hardness of middle part in sheet thickness (Hv) | $\Delta H_1$ (Hv) | $\Delta H_2$ (Hv) | Area rate of residual austenite (%) | Tensile strength (MPa) | Uniform elongation (%) | Average cross-sectional hardness (Hv) | Minimum hardness (Hv) | Average cross-sectional hardness-Minimum hardness (Hv) | Max. bending angle (°) | Hydrogen embrittlement resistance | |
| 301 | 574 | 187 | 44 | 2.5 | 1717 | 5.5 | 574 | 505 | 69 | 94.8 | Good | Inv.ex. |
| 302 | 686 | 163 | 34 | 3.4 | 2052 | 5.9 | 686 | 656 | 30 | 96.9 | Good | Inv.ex. |
| 303 | 760 | 172 | 40 | 3.9 | 2272 | 6.5 | 760 | 699 | 61 | 92.4 | Good | Inv.ex. |
| 304 | 789 | 131 | 30 | 4.5 | 2510 | 6.7 | 789 | 753 | 36 | 94.6 | Good | Inv.ex. |
| 305 | **436** | 190 | 29 | 2.2 | **1304** | 5.1 | 436 | 401 | 35 | 101.7 | Good | **Comp. ex.** |
| 306 | 742 | 177 | 44 | 3.7 | 2217 | 6.1 | 742 | 674 | 68 | 94.7 | Good | Inv.ex. |
| 307 | 737 | 111 | 14 | 3.1 | 2202 | 6.8 | 737 | 712 | 25 | 96.4 | Good | Inv.ex. |
| 308 | 778 | 181 | 37 | 4.4 | 2326 | 6.9 | 778 | 723 | 55 | 104.9 | Good | Inv.ex. |
| 309 | **901** | 173 | 37 | 3.8 | 2973 | 6.8 | 1428 | 1354 | 74 | **45.8** | Good | **Comp.ex.** |
| 310 | 667 | 167 | 29 | **0.2** | 1994 | **2.9** | 667 | 619 | 48 | 98.3 | Good | Inv.ex. |
| 311 | 757 | 164 | 36 | **0.7** | 2265 | **3.3** | 757 | 730 | 27 | 92.5 | Good | Inv.ex. |
| 312 | **442** | 154 | 46 | 2.1 | **1459** | 5.2 | 442 | 261 | **181** | 103.0 | Good | **Comp.ex.** |
| 313 | 717 | 105 | 24 | 2.8 | 2144 | 6.2 | 717 | 552 | **165** | 92.1 | Good | Inv.ex. |
| 314 | 738 | 178 | 33 | **0.4** | 2208 | **3.2** | 738 | 594 | **144** | 96.6 | Good | Inv.ex. |
| 315 | 724 | 178 | 45 | **0.8** | 2166 | **3.8** | 724 | 575 | **149** | 98.7 | Good | Inv.ex. |
| 316 | 769 | 128 | 39 | 2.9 | 2299 | 6.4 | 769 | 726 | 43 | 96.5 | Good | Inv.ex. |
| 317 | 741 | 137 | 28 | 2.0 | 2214 | 5.4 | 741 | 673 | 68 | 95.6 | Good | Inv.ex. |
| 318 | 754 | 152 | 30 | 2.6 | 2254 | 5.7 | 754 | 683 | 71 | 93.2 | Good | Inv.ex. |
| 319 | 680 | 181 | 28 | 3.3 | 2033 | 6.7 | 680 | 640 | 40 | 94.5 | Good | Inv.ex. |
| 320 | 675 | 170 | 45 | 2.7 | 2018 | 5.9 | 675 | 636 | 39 | 97.7 | Good | Inv.ex. |

[Table 16-2]

Table 16-2

| Man. no. | Microstructure | | | | Mechanical properties | | | | | | | | Remarks |
|---|---|---|---|---|---|---|---|---|---|---|---|---|---|
| | Hardness of middle part in sheet thickness (Hv) | $\Delta H_1$ (Hv) | $\Delta H_2$ (Hv) | Area rate of residual austenite (%) | Tensile strength (MPa) | Uniform elongation (%) | Average cross-sectional hardness (Hv) | Minimum hardness (Hv) | Average cross-sectional hardness-Minimum hardness (Hv) | Max. bending angle (°) | Hydrogen embrittlement resistance | | |
| 321 | 592 | 174 | 48 | 2.5 | 1771 | 5.5 | 592 | 552 | 40 | 96.2 | Good | | Inv.ex. |
| 322 | 584 | 130 | 48 | 3.3 | 1747 | 6.8 | 584 | 526 | 58 | 103.3 | Good | | Inv.ex. |
| 323 | 580 | 156 | 34 | 2.7 | 1735 | 5.9 | 580 | 538 | 42 | 99.1 | Good | | Inv.ex. |
| 324 | 698 | 155 | 32 | 4.3 | 2088 | 6.9 | 698 | 667 | 31 | 92.0 | Good | | Inv.ex. |
| 325 | 691 | 138 | 30 | 2.7 | 2067 | 5.9 | 691 | 622 | 69 | 98.3 | Good | | Inv.ex. |
| 326 | 689 | 150 | 40 | 3.4 | 2061 | 6.9 | 689 | 628 | 61 | 95.7 | Good | | Inv.ex. |
| 327 | 742 | 178 | 49 | 2.0 | 2219 | 5.3 | 742 | 701 | 41 | 99.1 | Good | | Inv.ex. |
| 328 | 753 | 155 | 30 | 3.4 | 2251 | 6.1 | 753 | 721 | 32 | 101.8 | Good | | Inv.ex. |
| 329 | 745 | 150 | 48 | 3.7 | 2228 | 6.8 | 745 | 715 | 30 | 97.1 | Good | | Inv.ex. |
| 330 | 788 | 157 | 47 | 4.1 | 2514 | 6.7 | 788 | 749 | 39 | 94.1 | Good | | Inv.ex. |
| 331 | 791 | 142 | 44 | 4.1 | 2519 | 6.9 | 791 | 734 | 57 | 96.6 | Good | | Inv.ex. |
| 332 | 789 | 161 | 36 | 2.4 | 2510 | 5.3 | 789 | 761 | 28 | 101.4 | Good | | Inv.ex. |
| 333 | 691 | **209** | **5** | 4.5 | 2067 | 6.6 | 691 | 638 | 53 | **53.8** | **Poor** | | **Comp.ex.** |
| 334 | 695 | **6** | **221** | 4.5 | 2079 | 6.8 | 695 | 639 | 56 | **66.5** | Good | | **Comp.ex.** |
| 335 | 698 | **219** | **5** | 3.0 | 2088 | 6.6 | 698 | 672 | 26 | **62.9** | **Poor** | | **Comp.ex.** |
| 336 | 708 | 106 | 45 | 4.5 | 2118 | 6.8 | 708 | 654 | 54 | 94.2 | Good | | Inv.ex. |
| 337 | 695 | 174 | 42 | 4.0 | 2079 | 6.9 | 695 | 640 | 55 | 99.6 | Good | | Inv.ex. |
| 338 | 751 | 141 | 33 | 4.6 | 2245 | 6.9 | 751 | 699 | 52 | 97.1 | Good | | Inv.ex. |
| 339 | 762 | 143 | 37 | 4.1 | 2278 | 6.5 | 762 | 729 | 33 | 95.8 | Good | | Inv.ex. |
| 340 | 700 | 160 | 26 | 3.4 | 2094 | 6.8 | 700 | 638 | 62 | 101.9 | Good | | Inv.ex. |

(continued)

| Man. no. | Microstructure | | | | Mechanical properties | | | | | | | Remarks |
|---|---|---|---|---|---|---|---|---|---|---|---|---|
| | Hardness of middle part in sheet thickness (Hv) | $\Delta H_1$ (Hv) | $\Delta H_2$ (Hv) | Area rate of residual austenite (%) | Tensile strength (MPa) | Uniform elongation (%) | Average cross-sectional hardness (Hv) | Minimum hardness (Hv) | Average cross-sectional hardness-Minimum hardness (Hv) | Max. bending angle (°) | Hydrogen embrittlement resistance | |
| 341 | 640 | 200 | 6 | 2.9 | 2112 | 6.5 | 640 | 598 | 42 | 61.8 | Poor | Comp.ex. |
| 342 | 629 | 202 | 7 | 2.8 | 2076 | 6.5 | 629 | 591 | 38 | 63.0 | Poor | Comp.ex. |
| 343 | 651 | 204 | 5 | 3.0 | 2148 | 6.6 | 651 | 620 | 31 | 61.2 | Poor | Comp.ex. |

66

In the examples, in the same way as the case of Example B, the impact resistance of the hot stamped body was evaluated from the viewpoint of variation in hardness as well. A cross-section of a long shaped hot stamped body vertical to the long direction was taken at any position in that long direction and measured for hardness of the middle position in sheet thickness in the entire cross-sectional region including the vertical walls. For the measurement, a Vickers tester was used. The measurement load was 1 kgf and the measurement intervals were 1 mm. A case where there were no measurement points of below 100Hv from the average value of all measurement points was evaluated as being small in variation of hardness, i.e., being excellent in strength stability, and as a result being excellent in impact resistance and marked as a passing level (good), while a case where there were measurement points of below 100Hv was marked as a failing level (poor). More specifically, a case where a difference from an average value of hardness of all measurement points (average cross-sectional hardness in Table 16) and the value of the smallest hardness among all measurement points is 100Hv was marked as passing and a case of more than 100Hv was marked as failing.

Furthermore, in the examples, in the same way as the case of Example C, the impact resistance of the hot stamped body was evaluated from the viewpoint of ductility as well. Specifically, a tensile test of the hot stamped steel sheet was performed to find the uniform elongation of the steel sheet and evaluate the impact resistance. The tensile test was performed by preparing a No. 5 test piece described in JIS Z 2201 and following the test method described in JIS Z 2241. The elongation at which the greatest tensile load was obtained was defined as the "uniform elongation".

In the same way as the case of Example A, a case where the tensile strength is 1500 MPa or more, the maximum bending angle (°) is 90 (°) or more, and the hydrogen embrittlement resistance is of the passing level was evaluated as a hot stamped body excellent in impact resistance and hydrogen embrittlement resistance (invention examples in Table 16). Further, a case where the uniform elongation is 5% or more and the average cross-sectional hardness-minimum hardness is 100Hv or less was evaluated as improved in impact resistance even from the viewpoint of ductility and strength stability in addition to bendability (invention examples other than Examples 310, 311, and 313 to 315 in Table 16). On the other hand, a case where even one of the requirements of "tensile strength", "maximum bending angle", and "hydrogen embrittlement resistance" failed to be satisfied was designated as a comparative example.

**Claims**

1. A hot stamped body comprising a middle part in sheet thickness and a surface layer arranged at both sides or one side of the middle part in sheet thickness, wherein
   the hot stamped body further comprises an intermediate layer formed between the middle part in sheet thickness and each surface layer so as to adjoin them,
   the middle part in sheet thickness comprises, by mass%,
   C: 0.20% or more and less than 0.70%
   Si: less than 3.00%,
   Mn: 0.20% or more and less than 3.00%,
   P: 0.10% or less,
   S: 0.10% or less,
   sol. Al: 0.0002% or more and 3.0000% or less,
   N: 0.01% or less, and
   a balance of Fe and unavoidable impurities,
   the middle part in sheet thickness has a hardness of 500Hv or more and 800Hv or less,
   the surface layer has a hardness change $\Delta H_1$ in the sheet thickness direction of 100Hv or more and less than 200Hv, and
   the intermediate layer has a hardness change $\Delta H_2$ in the sheet thickness direction of 10Hv or more and less than 50Hv.

2. The hot stamped body according to claim 1, wherein the Si content of the middle part in sheet thickness is 0.50% or less and the Mn content of the middle part in sheet thickness is 0.20% or more and less than 1.50%.

3. The hot stamped body according to claim 1, wherein the Si content of the middle part in sheet thickness is 0.50% or less and the Mn content of the middle part in sheet thickness is 1.50% or more and less than 3.00%.

4. The hot stamped body according to claim 1, wherein the Si content of the middle part in sheet thickness is more than 0.50% and less than 3.00%, the Mn content of the middle part in sheet thickness is 0.20% or more and less than 1.50%, and the middle part in sheet thickness comprises, by area percent, 1.0% or more and less than 5.0% of residual austenite.

5. The hot stamped body according to claim 1, wherein the Si content of the middle part in sheet thickness is more than 0.50% and less than 3.00%, the Mn content of the middle part in sheet thickness is 1.50% or more and less than 3.00%, and the middle part in sheet thickness comprises, by area percent, 1.0% or more and less than 5.0% of residual austenite.

6. The hot stamped body according to any one of claims 1 to 5, wherein the middle part in sheet thickness further comprises, by mass%, Ni: 0.01% or more and 3.00% or less.

7. The hot stamped body according to any one of claims 1 to 6, wherein the middle part in sheet thickness further comprises, by mass%, one or more of Nb: 0.010% or more and 0.150% or less, Ti: 0.010% or more and 0.150% or less, Mo: 0.005% or more and 1.000% or less, and B: 0.0005% or more and 0.0100% or less.

8. The hot stamped body according to any one of claims 1 to 7, further comprising a plated layer at the surface of the each surface layer.

# FIG. 1

# FIG. 2

**EP 3 584 341 A1**

<table>
<tr><td colspan="2"><strong>INTERNATIONAL SEARCH REPORT</strong></td><td>International application No.<br>PCT/JP2018/006057</td></tr>
</table>

A. CLASSIFICATION OF SUBJECT MATTER

Int.Cl.  C22C38/00(2006.01)i,  C21D1/18(2006.01)i,  C21D9/00(2006.01)i,
C22C38/60(2006.01)i

According to International Patent Classification (IPC) or to both national classification and IPC

B. FIELDS SEARCHED

Minimum documentation searched (classification system followed by classification symbols)
Int.Cl.  C22C38/00-38/60, C21D1/021/84, C21D9/00-9/44, C21D9/50

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2014/024831 A1 (NIPPON STEEL & SUMITOMO METAL CORPORATION) 13 February 2014 & US 2015/0225830 A1 & EP 2881484 A1 | 1-8 |
| A | WO 2012/128225 A1 (NIPPON STEEL & SUMITOMO METAL CORPORATION) 27 September 2012 & US 2014/0004378 A1 & EP 2687620 A1 | 1-8 |
| A | WO 2015/152284 A1 (NIPPON STEEL & SUMITOMO METAL CORPORATION) 08 October 2015 & US 2017/0145532 A1 & EP 3128017 A1 | 1-8 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 May 2018 (08.05.2018) | Date of mailing of the international search report<br>22 May 2018 (22.05.2018) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

70

EP 3 584 341 A1

**INTERNATIONAL SEARCH REPORT**

International application No.

PCT/JP2018/006057

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/034714 A1 (NIPPON STEEL & SUMITOMO METAL CORPORATION) 06 March 2014 & US 2015/0225821 A1 & EP 2891727 A1 | 1-8 |
| A | WO 2013/180180 A1 (KOBE STEEL, LTD.) 05 December 2013 & US 2015/0144231 A1 & EP 2857539 A1 | 1-8 |
| A | JP 2014-201765 A (NIPPON STEEL & SUMITOMO METAL CORPORATION) 27 October 2014 (Family: none) | 1-8 |
| A | JP 2015-196844 A (NIPPON STEEL & SUMITOMO METAL CORPORATION) 09 November 2015 (Family: none) | 1-8 |

Form PCT/ISA/210 (continuation of second sheet) (January 2015)

71

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015030890 A
- JP 2006104546 A
- WO 2015097882 A